# EUROPEAN PATENT APPLICATION

(11) **EP 4 723 340 A1**
(43) Date of publication of application: **08.04.2026**
(21) Application number: 23950475.6
(22) Date of filing: 24.11.2023
(51) Int. Cl.: H01M 50/30, H01M 10/0525, H01M 50/249, H01M 50/204

(54) **BATTERY CELL, BATTERY AND ELECTRIC DEVICE**

(30) Priority: 01.09.2023 CN 202311119991
(71) Applicant: Contemporary Amperex Technology Co., Limited, Ningde, Fujian 352100 (CN)
(72) Inventor: SU, Huasheng, Ningde, Fujian 352100 (CN); YANG, Rui, Ningde, Fujian 352100 (CN); XING, Chengyou, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2023/134090
(87) International publication number: WO 2025/043905

(57) **Abstract**

Embodiments of the present application provide a battery cell, a battery, and a power consuming device, and belongs to the field of battery technologies. The battery cell includes a housing and an electrode assembly. The housing includes a first half region and a second half region. Along a length direction of the housing, a part from a middle section of the housing to an end of the housing is the first half region, a part from the middle section of the housing to the other end of the housing is the second half region, a length of the housing is L, L≥80 mm, and the middle section is perpendicular to the length direction. The electrode assembly is accommodated in the housing. The electrode assembly includes a body portion and a tab, at least one end of the body portion along the length direction is provided with the tab, a part of the body portion is located in the first half region, and the other part of the body portion is located in the second half region. The first half region and the second half region are each provided with at least one pressure relief mechanism, the body portion is provided with a central hole, along the length direction, the central hole runs through the body portion, and the central hole is configured to communicate an internal space of the first half region with an internal space of the second half region. The reliability of the battery cell can be effectively improved.

## Description

### CROSS-REFERENCE TO RELATED APPLICATIONS

The present application claims priority to Chinese Patent Application No. 2023111199910, entitled "BATTERY CELL, BATTERY, AND POWER CONSUMING DEVICE" and filed on September 1, 2023, which is incorporated herein by reference in its entirety.

### TECHNICAL FIELD

The present application relates to the field of battery technologies, and specifically, to a battery cell, a battery, and a power consuming device.

### BACKGROUND

A battery is widely used in electronic devices, for example, a mobile phone, a notebook computer, a battery car, an electric vehicle, an electric airplane, an electric ship, an electric toy vehicle, an electric toy ship, an electric toy airplane, or an electric tool.

In battery technologies, a pressure relief mechanism may be arranged in a battery cell, so that pressure is released through the pressure relief mechanism when the battery cell undergoes a thermal runaway. For a common battery cell, the pressure is still not released in time, leading to poor reliability of the battery cell. Therefore, how to the improve the reliability of the battery cell is a technical problem urgently to be resolved in the battery technologies.

### SUMMARY

Embodiments of the present application provide a battery cell, a battery, and a power consuming device, so that the reliability of the battery cell can be effectively improved.

According to a first aspect, an embodiment of the present application provides a battery cell. The battery cell includes a housing and an electrode assembly. The housing includes a first half region and a second half region. Along a length direction of the housing, a part from a middle section of the housing to an end of the housing is the first half region, a part from the middle section of the housing to the other end of the housing is the second half region, a length of the housing is L, L≥80 mm, and the middle section is perpendicular to the length direction. The electrode assembly is accommodated in the housing. The electrode assembly includes a body portion and a tab, at least one end of the body portion along the length direction is provided with the tab, a part of the body portion is located in the first half region, and the other part of the body portion is located in the second half region. The first half region and the second half region are each provided with at least one pressure relief mechanism, the body portion is provided with a central hole, along the length direction, the central hole runs through the body portion, and the central hole is configured to communicate an internal space of the first half region with an internal space of the second half region.

In the foregoing technical solution, in a case that the length of the housing is greater than or equal to 80 mm, the first half region and the second half region are each provided with a pressure relief mechanism, so that when the battery cell undergoes a thermal runaway, pressure can be released through the pressure relief mechanism in the first half region and the pressure relief mechanism in the second half region. Therefore, a discharge medium located in the first half region in the housing can be discharged through the pressure relief mechanism in the first half region more quickly, and a discharge medium located in the second half region in the housing can be discharged through the pressure relief mechanism in the second half region more quickly, thereby improving the pressure relief timeliness of the battery cell and further effectively improving the reliability of the battery cell. The central hole of the body portion may be used as a flow channel of the discharge medium in the housing, the discharge medium at an end of the body portion can be discharged through the pressure relief mechanism in the first half region or can flow to the other end of the body portion through the central hole and be discharged through the pressure relief mechanism in the second half region, thereby improving the pressure relief timeliness of the battery cell.

In some embodiments, the housing has a first end wall, a second end wall, and a side wall, the first end wall is located in the first half region, the second end wall is located in the second half region, the first end wall and the second end wall are arranged opposite to each other along the length direction, and the side wall is arranged around the first end wall and the second end wall; the first end wall and the second end wall are each provided with at least one pressure relief mechanism; and/or a part of the side wall located in the first half region and a part of the side wall located in the second half region are each provided with at least one pressure relief mechanism; and/or the part of the side wall located in the first half region and the second end wall are each provided with at least one pressure relief mechanism; and/or the part of the side wall located in the second half region and the first end wall are each provided with at least one pressure relief mechanism. If the first end wall and the second end wall are each provided with at least one pressure relief mechanism, the discharge medium in the housing can be discharged through two ends of the housing, so that the discharged medium accumulated at two ends of the electrode assembly in the housing can be quickly discharged, thereby improving the reliability of the battery cell. If the part of the side wall located in the first half region and the part of the side wall located in the second half region are each provided with the pressure relief mechanism, the discharge medium in the housing can be discharged through side portions of the housing, thereby reducing a risk of causing damage to an external component connected to an end portion of the battery cell by the discharge medium. If the part of the side wall located in the first half region and the second end wall are each provided with the pressure relief mechanism, the discharge medium in the housing can be discharged through the side portion of the housing and the end portion of the housing, thereby improving the pressure relief timeliness of the battery cell. If the part of the side wall located in the second half region and the first end wall are each provided with the pressure relief mechanism, the discharge medium in the housing can also be discharged through the side portion of the housing and the end portion of the housing, thereby improving the pressure relief timeliness of the battery cell.

In some embodiments, the side wall includes a first wall portion and a second wall portion that are arranged opposite to each other, the first wall portion is configured to support the body portion along a gravity direction, a channel gap is formed between the second wall portion and the body portion, and the channel gap is configured to communicate spaces located at two ends of the body portion along the length direction in the housing. The channel gap is formed between the first wall portion and the body portion and the channel gap communicates the spaces located at the two ends of the body portion along the length direction in the housing, so that when the battery cell undergoes a thermal runaway, if pressure cannot be released through the pressure relief mechanism in the first half region in time, the discharge medium near the pressure relief mechanism in the first half region can flow to the pressure relief mechanism in the second half region through the channel gap to be discharged through the pressure relief mechanism. Similarly, if pressure cannot be released through the pressure relief mechanism in the second half region in time, the discharge medium near the pressure relief mechanism in the second half region can flow to the pressure relief mechanism in the first half region through the channel gap to be discharged through the pressure relief mechanism.

In some embodiments, the first wall portion is provided with at least one pressure relief mechanism. In this way, when the battery cell undergoes a thermal runaway, the discharge medium in the housing can be discharged through a bottom portion of the battery cell.

In some embodiments, the first wall portion is provided with a plurality of pressure relief mechanisms, the plurality of pressure relief mechanisms include a first pressure relief mechanism and a second pressure relief mechanism that are arranged on the first wall portion, the first pressure relief mechanism is located in the first half region, and the second pressure relief mechanism is located in the second half region. If a thermal runaway region of the body portion of the electrode assembly is located in the first half region, a large amount of discharge media are accumulated near the first pressure relief mechanism, and if the discharge media cannot be discharged in time through the first pressure relief mechanism, the discharge media can flow to the second pressure relief mechanism through the channel gap and be discharged through the second pressure relief mechanism, thereby improving the pressure relief timeliness of the battery cell; and if the thermal runaway region of the body portion of the electrode assembly is located in the second half region, a large amount of discharge media are accumulated near the second pressure relief mechanism, and if the discharge media cannot be discharged in time through the second pressure relief mechanism, the discharge media can flow to the first pressure relief mechanism through the channel gap and be discharged through the first pressure relief mechanism, thereby improving the pressure relief timeliness of the battery cell.

In some embodiments, the first pressure relief mechanism and the second pressure relief mechanism are arranged symmetrically about the middle section of the housing. By causing the first pressure relief mechanism and the second pressure relief mechanism to have the same pressure relief area and causing the first pressure relief mechanism and the second pressure relief mechanism to have the same distance to the middle section of the housing along the length direction, the first pressure relief mechanism and the second pressure relief mechanism both can play a good pressure relief function when the battery cell undergoes a thermal runaway.

In some embodiments, the plurality of pressure relief mechanisms further include a third pressure relief mechanism arranged on the first wall portion, a part of the third pressure relief mechanism is located in the first half region, and the other part of the third pressure relief mechanism is located in the second half region. In this way, a middle region of the first wall portion is also provided with a pressure relief mechanism, which is conducive to discharging of the discharge medium located in the middle region of the housing, thereby improving the pressure relief timeliness of the battery cell.

In some embodiments, the side wall is provided with at least one pressure relief mechanism, a part of the at least one pressure relief mechanism on the side wall is located in the first half region, and the other part of the at least one pressure relief mechanism on the side wall is located in the second half region. In this way, not only the first half region and the second half region of the housing are provided with pressure relief mechanisms, a middle region of the side wall of the housing is also provided with a pressure relief mechanism, thereby improving the pressure relief timeliness of the battery cell.

In some embodiments, the side wall is provided with a plurality of pressure relief mechanisms, the plurality of pressure relief mechanisms include a first pressure relief mechanism, a second pressure relief mechanism, and a third pressure relief mechanism, the first pressure relief mechanism is located in the first half region, the second pressure relief mechanism is located in the second half region, a part of the third pressure relief mechanism is located in the first half region, and the other part of the third pressure relief mechanism is located in the second half region. The first pressure relief mechanism, the second pressure relief mechanism, and the third pressure relief mechanism are arranged on the side wall, so that the discharge medium in regions at two ends of an internal space of the housing can be respectively discharged through the first pressure relief mechanism and the second pressure relief mechanism, and the discharge medium in the middle region can be discharged through the third pressure relief mechanism, thereby improving the pressure relief timeliness of the battery cell.

In some embodiments, the housing includes a shell and two end caps, where the shell is provided with openings at two opposite ends along the length direction; and the two end caps respectively close the openings at two ends of the shell, where the two end caps are respectively the first end wall and the second end wall. The shell is a hollow structure provided with openings at two ends, and the electrode assembly can enter the shell through the opening at any end of the shell, thereby improving the shell entering efficiency of the electrode assembly.

In some embodiments, the housing includes a shell and an end cap, where the shell is provided with an opening at an end along the length direction; and the end cap closes the opening, where the end cap is the first end wall, and along the length direction, a wall portion of the shell opposite to the end cap is the second end wall. The shell is a hollow structure provided with an opening at an end, the electrode assembly is accommodated in the shell, and assembly of the battery cell can be completed by closing the opening of the shell through the end cap, thereby effectively reducing the assembly difficulty of the battery cell.

In some embodiments, the housing includes a first wall portion, the first wall portion is provided with a plurality of pressure relief mechanisms that are arranged at intervals along the length direction, the pressure relief mechanism is provided with a scored groove, and along the length direction, a sum of maximum spans of the scored grooves of the plurality of pressure relief mechanisms is L₁ and meets: 0.2≤L₁/L≤0.6. L₁/L≥0.2, so that the sum of the maximum spans of the scored grooves of the plurality of pressure relief mechanisms on the first wall portion along the length direction is relatively large, so that a total pressure relief area of the plurality of pressure relief mechanisms on the first wall portion can be increased, helping improve a pressure relief rate of the battery cell. L₁/L≤ 0.6, so that the sum of the maximum spans of the scored grooves of the plurality of pressure relief mechanisms on the first wall portion along the length direction is not excessively large, helping improve a strength of the first wall portion.

In some embodiments, the battery cell further includes a support member, and the support member is arranged in the central hole and supported on a hole wall surface of the central hole. Through arrangement of the support member, a collapse risk of the central hole may be reduced. On one hand, the central hole can be kept smooth, so that the discharge medium at an end of the body portion can flow to the other end of the body portion through the central hole; and on the other hand, a risk of lithium precipitation caused by collapse of the central hole can be reduced.

In some embodiments, the support member is an adhesive layer adhered to a hole wall surface of the central hole. The support member is not easily separated from the hole wall surface of the central hole, so that the support member can play a better support reinforcement function on the central hole.

In some embodiments, the electrode assembly includes a positive electrode plate, a negative electrode plate, and an isolation member, the isolation member is arranged between the positive electrode plate and the negative electrode plate, the positive electrode plate, the isolation member, and the negative electrode plate are wound to form a wound structure, the isolation member defines the central hole, and the support member is connected to the isolation member. In this way, before the electrode assembly is formed, the support member may be first connected to the isolation member, so that after the positive electrode plate, the isolation member, and the negative electrode plate are wound to form the electrode assembly, the support member is located in the central hole and supports the hole wall surface of the central hole. In this way, the difficulty in arranging the support member in the central hole can be reduced.

In some embodiments, a diameter of the central hole is D and meets: 3 mm≤D≤8 mm. D≥3 mm, so that the central hole has a relatively large hole diameter, and the discharge medium located at an end of the body portion in the housing can flow to the other end of the body portion through the central hole more quickly; and D≤8 mm, so that the hole diameter of the central hole is not excessively large, thereby reducing a collapse risk of the central hole.

In some embodiments, the battery cell further includes an electrode terminal and a current collector, the electrode terminal is arranged on the housing, the current collector is arranged on a side of the body portion facing the electrode terminal, the current collector connects the electrode terminal to the tab, the current collector is provided with a first through hole, and the first through hole is in communication with the central hole. Therefore, the current collector is less likely to block the central hole, and the discharge medium entering the central hole can smoothly flow to the pressure relief mechanism.

In some embodiments, a projection of a hole wall surface of the first through hole along the length direction is at least partially located in the central hole. Therefore, blocking of the current collector to the discharge medium in the central hole can be reduced, and the discharge medium in the central hole can flow to the pressure relief mechanism quickly through the first through hole.

In some embodiments, the pressure relief mechanism and a wall portion corresponding to the housing are integrally formed. The pressure relief mechanism has higher reliability, and a process of connecting the pressure relief mechanism to the housing is omitted, thereby reducing production costs of the battery cell.

In some embodiments, the pressure relief mechanism and the housing are separately arranged, the housing is provided with a pressure relief hole, and the pressure relief mechanism is mounted on the housing and covers the pressure relief hole. The pressure relief mechanism is a component independent of the housing, and the pressure relief mechanism and the housing may be separately produced and then assembled, which has low production difficulty and high efficiency.

In some embodiments, the housing is cuboid.

In some embodiments, the housing is cylindrical, and an axial direction of the housing is parallel to the length direction.

In some embodiments, L≥160 mm. In a case that the length of the housing is greater than or equal to 160 mm, it is more difficult for the battery cell to release pressure in time during a thermal runaway. However, by arranging the pressure relief mechanism in both the first half region and the second half region of the housing, a case that pressure is not released from the battery cell in time can be alleviated.

According to a second aspect, an embodiment of the present application provides a battery, including the battery cell according to any one of the embodiments of the first aspect.

According to a third aspect, an embodiment of the present application provides a power consuming device, including the battery cell according to any one of the embodiments of the first aspect, where the battery cell is configured to provide electric energy to the power consuming device.

### BRIEF DESCRIPTION OF THE DRAWINGS

To describe the technical solutions of the embodiments of the present application more clearly, the following briefly describes the accompanying drawings required for describing the embodiments. It should be understood that, the following accompanying drawings show only some embodiments of the present application, which should not be considered as a limitation on the scope. A person of ordinary skill in the art may still derive other related accompanying drawings according to the accompanying drawings without creative efforts.
FIG. 1 is a schematic structural diagram of a vehicle according to some embodiments of the present application;
FIG. 2 is an exploded view of a battery according to some embodiments of the present application;
FIG. 3 is an axonometric view of a battery cell (with a cuboid housing) according to some embodiments of the present application;
FIG. 4 is an exploded view of the battery cell shown in FIG. 3;
FIG. 5 is an A-direction view of the battery cell shown in FIG. 3;
FIG. 6 is an axonometric view of a battery cell (with a cuboid housing) according to some other embodiments of the present application;
FIG. 7 is an exploded view of the battery cell shown in FIG. 6;
FIG. 8 is an axonometric view of a battery cell (with a cuboid housing) according to still some other embodiments of the present application;
FIG. 9 is an axonometric view of a battery cell (with a cuboid housing) according to yet some other embodiments of the present application;
FIG. 10 is a cross-sectional view of a battery cell (with a cuboid housing) according to some embodiments of the present application;
FIG. 11 is a cross-sectional view of a battery cell (with a cuboid housing) according to some other embodiments of the present application;
FIG. 12 is an axonometric view of a battery cell (with a cylindrical housing) according to some embodiments of the present application;
FIG. 13 is an exploded view of a battery cell (with a cylindrical housing) according to some embodiments of the present application;
FIG. 14 is an axonometric view of a battery cell (with a cylindrical housing) according to some other embodiments of the present application;
FIG. 15 is a cross-sectional view of a battery cell (with a cylindrical housing) according to some embodiments of the present application;
FIG. 16 is an axonometric view of a housing according to some embodiments of the present application;
FIG. 17 is a cross-sectional view of the housing shown in FIG. 16 taken along an XY plane;
FIG. 18 is an enlarged view of the housing shown in FIG. 17 at a position B; and
FIG. 19 is a partial enlarged view of a housing according to some other embodiments of the present application.

Reference numerals: 1-Housing; 11-Shell; 12-End cap; 13-First half region; 14-Second half region; 15-First end wall; 16-Second end wall; 17-Side wall; 171-First wall portion; 172-Second wall portion; 173-Third wall portion; 174-Fourth wall portion; 175-Scored groove; 176-Weak region; 177-Pressure relief hole; 2-Electrode assembly; 21-Body portion; 211-Central hole; 22-Tab; 3-Pressure relief mechanism; 3a-First pressure relief mechanism; 3b-Second pressure relief mechanism; 3c-Third pressure relief mechanism; 31-Pressure relief region; 4-Electrode terminal; 5-Channel gap; 51-First space; 52-Second space; 6-Connecting block; 7-Support member; 8-Current collector; 81-First through hole; 10-Battery cell; 20-Box; 201-First part; 202-Second part; 100-Battery; 200-Controller; 300-Motor; 1000-Vehicle; W-Middle section; X-First direction; Y-Second direction; and Z-Length direction.

### DETAILED DESCRIPTION

To make the objectives, technical solutions, and advantages of the embodiments of the present application more comprehensible, the following clearly and completely describes the technical solutions in the embodiments of the present application with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

Unless otherwise defined, all technical and scientific terms used in the present application have same meanings as those commonly understood by a person skilled in the art to which the present application belongs. In the present application, the terms used in the specification of the present application are only intended to describe specific embodiments, and are not intended to limit the present application. The terms "include", "have", and any variants thereof in the specification, claims, and accompanying drawings of the present application are intended to cover non-exclusive inclusion. The terms "first" and "second" in the specification, claims, and accompanying drawings of the present application are intended to distinguish different objects, rather than to describe a specific sequence or primary-secondary relationship.

"Embodiment" mentioned in the present application means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment.

In the present application, the term "and/or" describes only an association relationship for describing associated objects and represents that three relationships may exist. For example, A and/or B may represent the following three cases: Only A exists, both A and B exist, and only B exists. In addition, in the present application, the character "/" generally indicates an "or" relationship between the associated objects.

In the embodiments of the present application, same reference numerals represent same components, and for brevity, in different embodiments, detailed description of the same components is omitted. It should be understood that, sizes such as thicknesses, lengths, and widths of various components and a size such as an entire thickness, length, or width of an integration device in the embodiments of the present application shown in the accompanying drawings are only exemplary description, and should not constitute any limitation to the present application.

"A plurality of" appearing in the present application indicates more than two (including two).

In the embodiments of the present application, a battery cell may be a secondary battery, where the secondary battery is a battery cell whose active material can be activated for continuous use through charging after the battery cell is discharged.

The battery cell includes but is not limited to a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery.

The battery cell generally includes an electrode assembly. The electrode assembly includes a positive electrode, a negative electrode, and an isolation member. During charging and discharging of the battery cell, active ions (for example, lithium ions) are intercalated and deintercalated back and forth between the positive electrode and the negative electrode. The isolation member is arranged between the positive electrode and the negative electrode, to reduce a risk of short circuit between the positive electrode and the negative electrode and to allow the active ions to pass through.

In some embodiments, the positive electrode may be a positive electrode plate, and the positive electrode plate may include a positive electrode current collector and a positive electrode active material arranged on at least surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

For example, the positive electrode current collector may be a metal foil or a composite current collector. For example, the metal foil may be made of silver-surface-processed aluminum, silver-surface-processed stainless steel, stainless steel, copper, aluminum, nickel, a carbon electrode, carbon, nickel, or titanium. The composite current collector may include a polymer material base layer and a metal layer. The composite current collector may be formed by forming a metal material (such as aluminum, aluminum alloy, nickel, nickel alloy, titanium, titanium alloy, silver, or silver alloy) on a polymer material substrate (such as a substrate of polypropylene, polyethylene terephthalate, polybutylene terephthalate, polystyrene, or polyethylene).

For example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials of batteries may also be used. One type of these positive electrode active materials may be used individually, or two or more types of these positive electrode active materials may be used in combination. An example of the lithium-containing phosphate may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiN_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), or LiNi_{0.8}Co_{0.1}Mn_{0.1}O₂ (also referred to as NCM₈₁₁ for short)), a lithium nickel cobalt aluminum oxide (for example, LiNi_{0.85}Co_{0.15}Al_{0.05}O₂), or modified compounds thereof.

In some embodiments, the positive electrode may be made of foamed metal. The foamed metal may be foamed nickel, foamed copper, foamed aluminum, foamed alloy, or foamed carbon. When the foamed metal is used as the positive electrode, a surface of the foamed metal may be not provided with the positive electrode active material or certainly may be provided with the positive electrode active material. For example, a lithium source material, potassium metal, or sodium metal may further be filled and/or deposited in the foamed metal, and the lithium source material is lithium metal and/or a lithium-rich material.

In some embodiments, the negative electrode may be a negative electrode plate, and the negative electrode plate may include a negative electrode current collector.

For example, the negative electrode current collector may be a metal foil, foamed metal, or a composite current collector. For example, the metal foil may be made of silver-surface-processed aluminum or stainless steel, stainless steel, copper, aluminum, nickel, a carbon electrode, carbon, nickel, or titanium. The foamed metal may be foamed nickel, foamed copper, foamed aluminum, foamed alloy, or foamed carbon. The composite current collector may include a polymer material base layer and a metal layer. The composite current collector may be formed by forming a metal material (such as copper, copper alloy, nickel, nickel alloy, titanium, titanium alloy, silver, or silver alloy) on a polymer material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in a thickness direction of the negative electrode current collector, and the negative electrode active material is arranged on either or both of the two opposite surfaces of the negative electrode current collector.

For example, the negative electrode active material may be a negative electrode active material used for a battery cell and well known in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, the present application is not limited to such materials, and may alternatively use other conventional materials that can be used as negative electrode active materials for batteries. One type of these negative electrode active materials may be used individually, or two or more types of these negative electrode active materials may be used in combination.

In some embodiments, a material of the positive electrode current collector may be aluminum, and a material of the negative electrode current collector may be copper.

In some implementations, the isolation member is a separator. Any well-known separator with a porous structure having good chemical stability and mechanical stability may be selected as the separator.

For example, a material of the separator may include at least one of glass fiber, non-woven fabric, polyethylene, polypropylene, or polyvinylidene fluoride. The separator may be a single-layer film or a multi-layer composite film. When the separator is a multi-layer composite film, materials of the layers may be the same or different. The isolation member may be an independent component located between the positive electrode and the negative electrode or may be attached to surfaces of the positive electrode and the negative electrode.

In some implementations, the isolation member is a solid electrolyte. The solid electrolyte is arranged between the positive electrode and the negative electrode, to transmit ions and separate the positive electrode from the negative electrode.

In some implementations, the battery cell further includes an electrolyte, and the electrolyte transmits ions between the positive electrode and the negative electrode. The electrolyte may be liquid, gelled, or solid. The liquid electrolyte includes an electrolyte salt and a solvent.

In some implementations, the electrolyte salt may include at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may optionally be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gelled electrolyte includes a skeleton network using a polymer as an electrolyte, with an ionic liquid-lithium salt.

The solid electrolyte includes a polymeric solid electrolyte, an inorganic solid electrolyte, and a composite solid electrolyte.

For example, the polymeric solid electrolyte may be polyether (polyoxyethylene), polysiloxane, polycarbonate, polyacrylonitrile, polyvinylidene fluoride, polymethylmethacrylate, single-ionic polymer, a polyionic liquid-lithium salt, or cellulose.

For example, the inorganic solid electrolyte may include one or more of an oxide solid electrolyte (crystalline perovskite, a sodium superionic conductor, garnet, an amorphous LiPON film), a sulfide solid electrolyte (a crystalline lithium superionic conductor (lithium germanium phosphorus sulfur or argyrodite) or an amorphous sulfide), a halide solid electrolyte, a nitride solid electrolyte, and a hydride solid electrolyte.

For example, the composite solid electrolyte is formed by filling the inorganic solid electrolyte into the polymeric solid electrolyte.

In some implementations, the electrode assembly is a wound structure. The positive electrode plate and the negative electrode plate are wound into a wound structure.

In some implementations, the electrode assembly is a laminated structure.

For example, a plurality of positive electrode plates and a plurality of negative electrode plates may be arranged respectively, and the plurality of positive electrode plates and the plurality of negative electrode plates are alternately stacked.

For example, a plurality of positive electrode plates may be arranged, the negative electrode plate may be folded to form a plurality of folding segments that are stacked, and one positive electrode plate is clamped between adjacent folding segments.

For example, the positive electrode plate and the negative electrode plate are both folded to form a plurality of folding segments that are stacked.

For example, a plurality of isolation members may be arranged, which are respectively arranged between any adjacent positive electrode plates or negative electrode plates.

For example, the isolation members may be continuously arranged, and are arranged between any adjacent positive electrode plates or negative electrode plates in a folding or winding manner.

In some implementations, the electrode assembly may be in a shape of a cylinder, a flat shape, or a polygon prism.

In some implementations, the electrode assembly is provided with a tab, and the tab may output a current from the electrode assembly. The tab includes a positive electrode tab and a negative electrode tab.

In some embodiments, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

For example, the battery cell may be a cylindrical battery cell, a prismatic battery cell, a soft pack battery cell, or a battery cell in another shape. The prismatic battery cell includes a square-housing battery cell, a blade-shaped battery cell, or a polygon prismatic battery. The polygon prismatic battery is, for example, a hexagonal prismatic battery.

The battery mentioned in the embodiments of the present application is a single physical module including one or more battery cells to provide a higher voltage and a higher capacity.

In some embodiments, the battery may be a battery module, and when there are a plurality of battery cells, the plurality of battery cells are arranged and fixed to form a battery module.

In some embodiments, the battery may be a battery pack, the battery pack includes a box and a battery cell, and the battery cell or the battery module is accommodated in the box.

In some embodiments, the box may be used as a part of a chassis structure of a vehicle. For example, a part of the box may become at least a part of a floor of the vehicle, or a part of the box may become at least a part of a cross beam and a longitudinal beam of the vehicle.

In some embodiments, the battery may be an energy storage apparatus. The energy storage apparatus includes an energy storage container, an energy storage electric cabinet, or the like.

For the development of the battery technology, design factors in many aspects, for example, performance parameters such as an energy density, a cycle life, discharge capacity, and a charge-discharge rate need to be considered simultaneously, and the reliability of the battery cell also needs to be considered.

In the battery technology, a pressure relief mechanism may be arranged in the battery cell to improve the reliability of the battery cell. The pressure relief mechanism on the battery cell has important influences on the reliability of the battery. For example, when a phenomenon such as short circuit or overcharging occurs, a thermal runaway may occur in the battery cell, leading to a sudden rise in pressure or temperature. In this case, the internal pressure and temperature may be released to the outside through the pressure relief mechanism, to reduce a probability that explosion or fire breakout occurs in the battery cell.

In a common battery cell, a housing of the battery cell is only provided with one pressure relief mechanism, and the pressure relief mechanism is located at an end of the housing along a length direction, so that when the battery cell undergoes a thermal runaway, a discharge medium in the housing is discharged through the pressure relief mechanism, to release the pressure in the battery cell. However, when a length of the housing of the battery cell is greater than or equal to 80 mm, along the length direction of the housing, the discharge medium in a half region close to the pressure relief mechanism in the housing can quickly flow to the pressure relief mechanism, but the discharge medium in a half region away from the pressure relief mechanism in the housing can hardly flow to the pressure relief mechanism. As a result, a case that the pressure is not released in time easily occurs, leading to poor reliability of the battery cell.

In view of this, an embodiment of the present application provides a battery cell. In a case that a length of a housing is greater than or equal to 80 mm, the housing is divided into a first half region and a second half region. Along a length direction of the housing, a part from a middle section of the housing to an end of the housing is the first half region, a part from the middle section of the housing to the other end of the housing is the second half region, and at least one pressure relief mechanism is arranged in both the first half region and the second half region.

In such a battery cell, when the battery cell undergoes a thermal runaway, pressure can be released through the pressure relief mechanism in the first half region and the pressure relief mechanism in the second half region. Therefore, a discharge medium located in the first half region in the housing can be discharged through the pressure relief mechanism in the first half region more quickly, and a discharge medium located in the second half region in the housing can be discharged through the pressure relief mechanism in the second half region more quickly, thereby improving the pressure relief timeliness of the battery cell and further effectively improving the reliability of the battery cell.

The battery cell described in this embodiment of the present application is applicable to a battery and a power consuming device using the battery cell.

The power consuming device may be a vehicle, a mobile phone, a portable device, a notebook computer, a ship, a spacecraft, an electric toy, or an electric tool. The vehicle may be a fuel powered vehicle, a gas powered vehicle, or a new energy vehicle. The new energy vehicle may be a pure electric vehicle, a hybrid electric vehicle, or an extended range vehicle. The spacecraft includes an airplane, a rocket, a space shuttle, or a space ship. The electric toy includes a fixed or mobile electric toy, such as a game console, an electric vehicle toy, an electric ship toy, or an electric airplane toy. The electric tool includes a metal cutting electric tool, a grinding electric tool, an assembly electric tool, or a railway electric tool, for example, an electric drill, an electric grinding machine, an electric wrench, an electric screwdriver, an electric hammer, an impact drill, a concrete vibrator, or an electric planer. The power consuming device is not particularly limited in the embodiments of the present application.

For ease of description, in the following embodiments, description is provided by using an example in which the power consuming device is a vehicle.

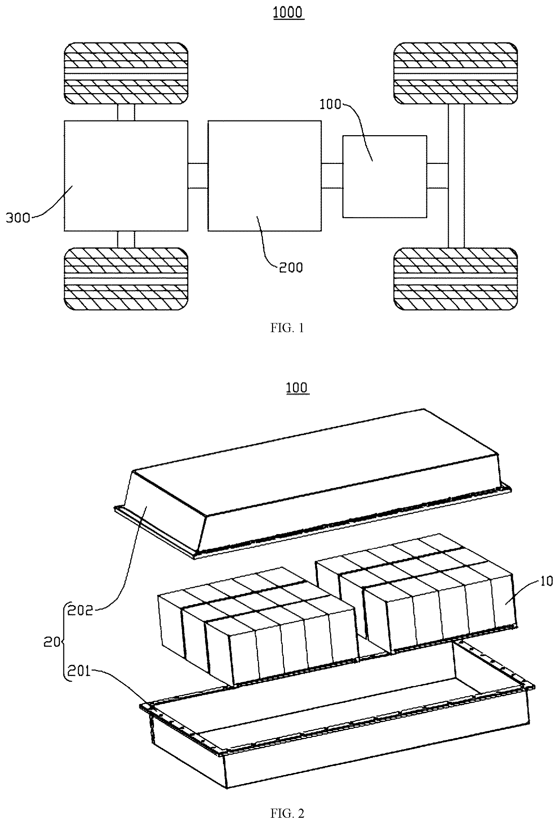

Referring to FIG. 1, FIG. 1 is a schematic structural diagram of a vehicle 1000 according to some embodiments of the present application. A battery 100 is arranged inside the vehicle 1000, and the battery 100 may be arranged at a bottom, head, or tail of the vehicle 1000. The battery 100 may be configured to supply power to the vehicle 1000. For example, the battery 100 may be used as an operating power supply of the vehicle 1000.

The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 can not only be used as the operating power supply of the vehicle 1000, but can also be used as a driving power supply of the vehicle 1000, to alternatively or partially replace fuel or natural gas to provide driving power for the vehicle 1000.

Referring to FIG. 2, FIG. 2 is an exploded view of a battery 100 according to some embodiments of the present application. The battery 100 includes a battery cell 10 and a box 20, where the battery cell 10 is accommodated in the box 20.

The box 20 is a component accommodating the battery cell 10, the box 20 provides an accommodating space for the battery cell 10, and the box 20 may use a plurality of structures. In some embodiments, the box 20 may include a first part 201 and a second part 202, and the first part 201 and the second part 202 cover each other, to define the accommodating space for accommodating the battery cell 10. The first part 201 and the second part 202 may be in a plurality of shapes, for example, a cuboid or a cylinder. The first part 201 may be a hollow structure being open on one side, the second part 202 may also be a hollow structure being open on one side, and an open side of the second part 202 covers an open side of the first part 201, to form the box 20 having the accommodating space. Alternatively, the first part 201 is a hollow structure being open on one side, the second part 202 is a plate-shaped structure, and the second part 202 covers an open side of the first part 201, to form the box 20 having the accommodating space. The first part 201 and the second part 202 may be sealed through a sealing element, and the sealing element may be a sealing ring, a sealing glue, or the like.

In the battery 100, there may be one or a plurality of battery cells 10. If there are a plurality of battery cells 10, the plurality of battery cells 10 may be connected in series, parallel, or series-parallel. Series-parallel connection means that both series connection and parallel connection exist among the plurality of battery cells 10. A plurality of battery modules may be formed by the plurality of battery cells 10 that are first connected in series, parallel, or series-parallel, and the plurality of battery modules are then connected in series, parallel, or series-parallel to form a whole and accommodated in the box 20. The plurality of battery cells 10 may alternatively be directly connected in series, parallel, or series-parallel together, and then a whole formed by the plurality of battery cells 10 may be accommodated in the box 20.

In some embodiments, the battery 100 may further include a bus component, and the plurality of battery cells 10 may be electrically connected through the bus component, to implement series connection, parallel connection, or series-parallel connection among the plurality of battery cells 10. The bus component may be a metal conductor, for example, copper, iron, aluminum, stainless steel, or aluminum alloy.

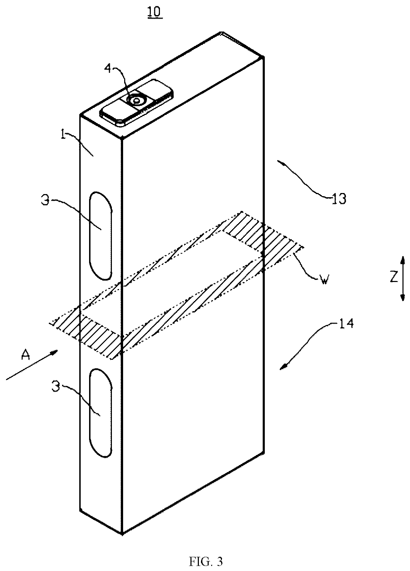

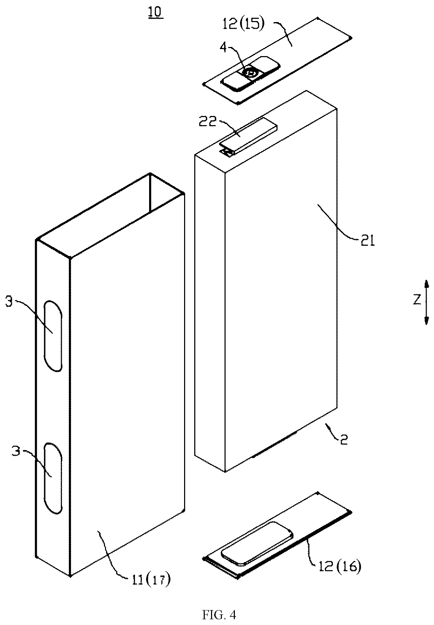

Referring to FIG. 3 and FIG. 4, FIG. 3 is an axonometric view of a battery cell 10 according to some embodiments of the present application; and FIG. 4 is an exploded view of the battery cell 10 shown in FIG. 3. The battery cell 10 may include a housing 1, an electrode assembly 2, and a pressure relief mechanism 3.

The housing 1 is a component configured to accommodate the electrode assembly 2 and an electrolyte. As an example, the housing 1 may include a shell 11 and an end cap 12.

The shell 11 may be a hollow structure provided with an opening at an end, or the shell 11 may be a hollow structure provided with openings at two opposite ends. The shell 11 may be in various shapes, for example, a cylindrical shape or a prism shape. The shell 11 may be made of various materials, for example, copper, iron, aluminum, steel, aluminum alloy, or plastic.

The end cap 12 is a component closing the opening of the shell 11 to isolate an internal environment of the battery cell 10 from an external environment. The end cap 12 and the shell 11 jointly define an accommodating space for accommodating the electrode assembly 2, the electrolyte, and other components. A shape of the end cap 12 may match the shape of the housing 1. For example, the shell 11 is a cuboid structure, and the end cap 12 is a rectangular plate-shaped structure matching the housing 1. For another example, the shell 11 is a cylindrical structure, and the end cap 12 is a circular plate-shaped structure matching the shell 11. The end cap 12 may also be made of various materials, for example, copper, iron, aluminum, steel, aluminum alloy, or plastic. The material of the end cap 12 and the material of the shell 11 may be the same or may be different.

In an embodiment that the shell 11 is provided with an opening at an end, one end cap 12 may be correspondingly arranged. In an embodiment that the shell 11 is provided with openings at two opposite ends, two end caps 12 may be correspondingly arranged, the two end caps 12 respectively close the two openings of the shell 11, and the two end caps 12 and the shell 11 jointly define the accommodating space.

The pressure relief mechanism 3 is a component releasing internal pressure of the battery cell 10. When the internal pressure of the battery cell 10 reaches a threshold, a discharge medium in the battery cell 10 is discharged through the pressure relief mechanism 3 to release the pressure. The discharge medium includes but is not limited to: an electrolyte solution, dissolved or split positive and negative electrode plates, fragments of the isolation member, and gas or fire generated by reactions. The pressure relief mechanism 3 may be arranged on the shell 11 or may be arranged on the end cap 12.

In some embodiments, the battery cell 10 may further include an electrode terminal 4, where the electrode terminal 4 is arranged on the housing 1, and the electrode terminal 4 is configured to be electrically connected to a tab 22 of the electrode assembly 2, to input or output electric energy of the battery cell 10. The electrode terminal 4 may be arranged on the shell 11 of the housing 1, or may be arranged on the end cap 12 of the housing 1. The electrode terminal 4 may be directly connected to the tab 22. For example, the electrode terminal 4 is directly welded to the tab 22. The electrode terminal 4 may alternatively be indirectly connected to the tab 22. For example, the electrode terminal 4 is indirectly connected to the tab 22 through a current collector 8.

As an example, as shown in FIG. 4, the shell 11 is a hollow structure provided with openings at two opposite ends, end caps 12 are arranged on the two opposite ends of the shell 11, electrode terminals 4 are arranged on the end caps 12 at the two ends of the shell 11, and two opposite ends of the electrode assembly 2 form tabs 22. The tab 22 at an end of the electrode assembly 2 is a positive electrode tab, the tab 22 at the other end of the electrode assembly 2 is a negative electrode tab, the electrode terminal 4 on one end cap 12 is electrically connected to the positive electrode tab, and the electrode terminal 4 on the other end cap 12 is electrically connected to the negative electrode tab.

Referring to FIG. 3 to FIG. 5, FIG. 5 is an A-direction view of the battery cell 10 shown in FIG. 3. An embodiment of the present application provides a battery cell 10. The battery cell 10 includes a housing 1. The housing 1 includes a first half region 13 and a second half region 14. Along a length direction Z of the housing 1, a part from a middle section W of the housing 1 to an end of the housing 1 is the first half region 13, a part from the middle section W of the housing 1 to the other end of the housing 1 is the second half region 14, a length of the housing 1 is L, L≥80 mm, and the middle section W is perpendicular to the length direction Z. The first half region 13 and the second half region 14 are each provided with a pressure relief mechanism 3.

The housing 1 may be in a shape of a cylinder or a prism. The prism may be a triangular prism, a quadrangular prism, a pentagonal prism, or a hexagonal prism, and the quadrangular prism may include a cuboid, a cube, or the like. In an embodiment that the housing 1 is in a shape of a cylinder, an axial direction of the housing 1 is the length direction Z of the housing 1. In an embodiment that the housing 1 is in a shape of a cuboid, the length of the housing 1 is greater than or equal to a height and a width of the housing 1.

It may be understood that, along the length direction Z of the housing 1, the middle section W is located at a middle position of the housing, and distances from the middle section W to two ends of the housing 1 are the same. Along the length direction Z of the housing 1, the housing 1 includes two opposite end surfaces, a maximum distance between the two end surfaces is the length of the housing 1, and distances from the middle section W to the two end surfaces are the same. If the two end surfaces of the housing 1 are planes, the length of the housing 1 is measured by using the two end surfaces as a reference. If a protrusion or a recessed portion is formed on one or two end surfaces of the housing 1, the length of the housing 1 is measured by using a planar region of the end surface as a reference. In an embodiment that the shell 11 is a hollow structure provided with an opening at an end along the length direction Z, a surface of the end cap 12 facing the outside of the housing 1 may be an end surface of the housing 1, and a surface that is of a wall portion of the shell 11 opposite to the end cap 12 and that faces the outside of the housing 1 is the other end surface of the housing 1. In an embodiment that the shell 11 is a hollow structure provided with openings at two opposite ends along the length direction Z, a surface of an end cap 12 facing the outside of the housing 1 may be an end surface of the housing 1, and a surface of the other end cap 12 facing the outside of the housing 1 is the other end surface of the housing 1.

One pressure relief mechanism 3 or a plurality of pressure relief mechanisms 3 may be arranged in the first half region 13; and one pressure relief mechanism 3 or a plurality of pressure relief mechanisms 3 may be arranged in the second half region 14. The pressure relief mechanism 3 may be a part of the housing 1 or may be a component independent of the housing 1. It may be understood that, the pressure relief mechanism 3 arranged in the first half region 13 is totally located in the first half region 13, and the pressure relief mechanism 3 arranged in the second half region 14 is totally located in the second half region 14.

In this embodiment, L may be any one or a range value between any two values of 80 mm, 100 mm, 140 mm, 160 mm, 180 mm, 200 mm, 240 mm, 260 mm, 280 mm, 300 mm, 340 mm, 360 mm, 380 mm, 400 mm, 440 mm, 460 mm, 480 mm, 500 mm, 540 mm, 560 mm, 580 mm, or 600 mm.

In the embodiments of the present application, in a case that the length of the housing 1 is greater than or equal to 80 mm, the first half region 13 and the second half region 14 are each provided with a pressure relief mechanism 3, so that when the battery cell 10 undergoes a thermal runaway, pressure can be released through the pressure relief mechanism 3 in the first half region 13 and the pressure relief mechanism 3 in the second half region 14. Therefore, a discharge medium located in the first half region 13 in the housing 1 can be discharged through the pressure relief mechanism 3 in the first half region 13 more quickly, and a discharge medium located in the second half region 14 in the housing 1 can be discharged through the pressure relief mechanism 3 in the second half region 14 more quickly, so that a path through which the discharge medium in the housing 1 flows to the pressure relief mechanism 3 is shortened, thereby improving the pressure relief timeliness of the battery cell 10 and further effectively improving the reliability of the battery cell 10.

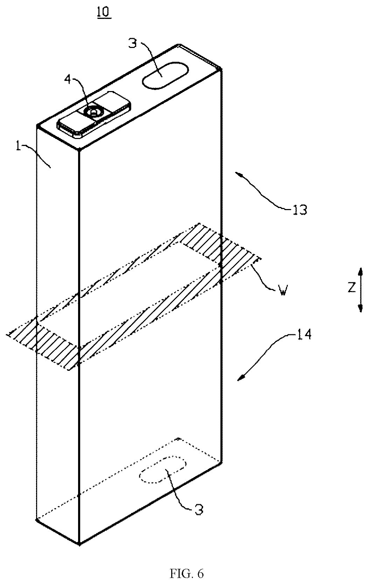

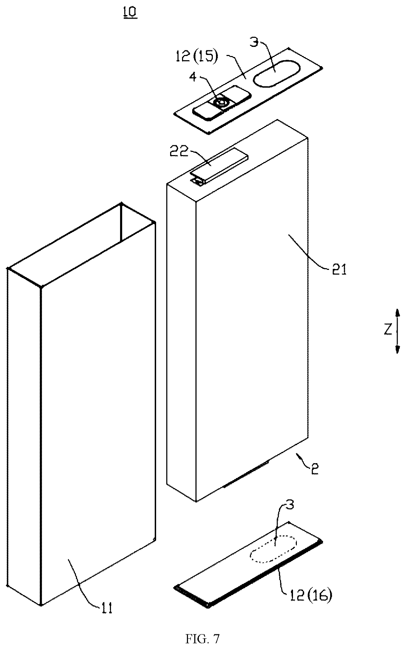

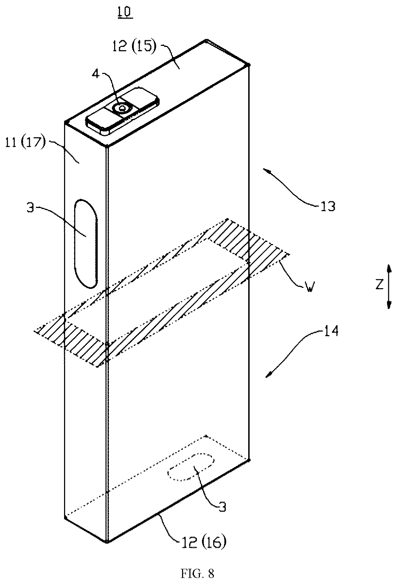

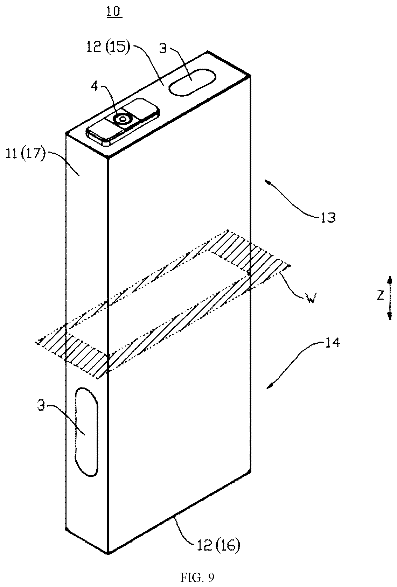

In some embodiments, referring to FIG. 3 to FIG. 9, FIG. 6 is an axonometric view of a battery cell 10 (with a cuboid housing 1) according to some other embodiments of the present application; FIG. 7 is an exploded view of the battery cell 10 shown in FIG. 6; FIG. 8 is an axonometric view of a battery cell 10 (with a cuboid housing 1) according to still some other embodiments of the present application; and FIG. 9 is an axonometric view of a battery cell 10 (with a cuboid housing 1) according to yet some other embodiments of the present application. The housing 1 has a first end wall 15, a second end wall 16, and a side wall 17, the first end wall 15 is located in the first half region 13, the second end wall 16 is located in the second half region 14, the first end wall 15 and the second end wall 16 are arranged opposite to each other along the length direction Z of the housing 1, and the side wall 17 is arranged around the first end wall 15 and the second end wall 16.

The first end wall 15 and the second end wall 16 are each provided with at least one pressure relief mechanism 3; and/or a part of the side wall 17 located in the first half region 13 and a part of the side wall 17 located in the second half region 14 are each provided with at least one pressure relief mechanism 3; and/or the part of the side wall 17 located in the first half region 13 and the second end wall 16 are each provided with at least one pressure relief mechanism 3; and/or the part of the side wall 17 located in the second half region 14 and the first end wall 15 are each provided with at least one pressure relief mechanism 3.

The first end wall 15 and the second end wall 16 are two wall portions of the housing 1 that are arranged opposite to each other along the length direction Z. The first end wall 15 may be the end cap 12, and the second end wall 16 and the side wall 17 are integrally formed to form the shell 11; or the second end wall 16 may be the end cap 12, and the first end wall 15 and the side wall 17 are integrally formed to form the shell 11; or both the first end wall 15 and the second end wall 16 may be end caps 12, and the side wall 17 is the shell 11. It may be understood that, a part of the side wall 17 is located in the first half region 13 and the other part of the side wall 17 is located in the second half region 14. In an embodiment that the housing 1 is in a shape of a cuboid, both the first end wall 15 and the second end wall 16 may be rectangular plate-shaped structures, and the side wall 17 may be a cuboid hollow structure. In an embodiment that the housing 1 is in a shape of a cylinder, both the first end wall 15 and the second end wall 16 may be circular plate-shaped structures, and the side wall 17 may be a cylindrical hollow structure.

In an embodiment that the part of the side wall 17 located in the first half region 13 and the part of the side wall 17 located in the second half region 14 are provided with the pressure relief mechanism 3, the part of the side wall 17 located in the first half region 13 may be provided with one pressure relief mechanism 3 or may be provided with a plurality of pressure relief mechanisms 3, the part of the side wall 17 located in the second half region 14 may be provided with one pressure relief mechanism 3 or may be provided with a plurality of pressure relief mechanisms, and the first end wall 15 and the second end wall 16 may be provided with the pressure relief mechanism 3 or may not be provided with the pressure relief mechanism 3. As an example, as shown in FIG. 3 and FIG. 4, the part of the side wall 17 located in the first half region 13 and the part of the side wall 17 located in the second half region 14 may be provided with the pressure relief mechanism 3, and the first end wall 15 and the second end wall 16 are not provided with the pressure relief mechanism 3.

In an embodiment that the pressure relief mechanism 3 is arranged on both the first end wall 15 and the second end wall 16, the first end wall 15 may be provided with one pressure relief mechanism 3 or may be provided with a plurality of pressure relief mechanisms 3; and the second end wall 16 may be provided with one pressure relief mechanism 3 or may be provided with a plurality of pressure relief mechanisms 3, and the shell 11 may be provided with the pressure relief mechanism 3 or may not be provided with the pressure relief mechanism 3. As an example, as shown in FIG. 6 and FIG. 7, the first end wall 15 and the second end wall 16 may be provided with the pressure relief mechanism 3, and the shell 11 is not provided with the pressure relief mechanism 3.

In an embodiment that the part of the side wall 17 located in the first half region 13 and the second end wall 16 are provided with the pressure relief mechanism 3, the part of the side wall 17 located in the first half region 13 may be provided with one pressure relief mechanism 3 or may be provided with a plurality of pressure relief mechanisms 3, the second end wall 16 may be provided with one pressure relief mechanism 3 or may be provided with a plurality of pressure relief mechanisms 3, and the part of the side wall 17 located in the second half region 14 and the first end wall 15 may be provided with the pressure relief mechanism 3 or may not be provided with the pressure relief mechanism 3. As an example, as shown in FIG. 8, the part of the side wall 17 located in the first half region 13 and the second end wall 16 are provided with the pressure relief mechanism 3, and the part of the side wall 17 located in the second half region 14 and the first end wall 15 are not provided with the pressure relief mechanism 3.

In an embodiment that the part of the side wall 17 located in the second half region 14 and the first end wall 15 are provided with the pressure relief mechanism 3, the part of the side wall 17 located in the second half region 14 may be provided with one pressure relief mechanism 3 or may be provided with a plurality of pressure relief mechanisms 3, the first end wall 15 may be provided with one pressure relief mechanism 3 or may be provided with a plurality of pressure relief mechanisms 3, and the part of the side wall 17 located in the first half region 13 and the second end wall 16 may be provided with the pressure relief mechanism 3 or may not be provided with the pressure relief mechanism 3. As an example, as shown in FIG. 9, the part of the side wall 17 located in the second half region 14 and the first end wall 15 are provided with the pressure relief mechanism 3, and the part of the side wall 17 located in the first half region 13 and the second end wall 16 are not provided with the pressure relief mechanism 3.

If the first end wall 15 and the second end wall 16 are each provided with the pressure relief mechanism 3, when the battery cell 10 undergoes a thermal runaway, the discharge medium in the housing 1 can be discharged through two ends of the housing 1, so that the discharged medium accumulated at two ends of the electrode assembly 2 in the housing 1 can be quickly discharged, thereby improving the reliability of the battery cell 10. If the part of the side wall 17 located in the first half region 13 and the part of the side wall 17 located in the second half region 14 are each provided with the pressure relief mechanism 3, the discharge medium in the housing 1 can be discharged through side portions of the housing 1, thereby reducing a risk of causing damage to an external component connected to an end portion of the battery cell 10 by the discharge medium. The external component may be a bus component, a temperature detection element, or a voltage detection element connected to the electrode terminal 4. If the part of the side wall 17 located in the first half region 13 and the second end wall 16 are each provided with the pressure relief mechanism 3, the discharge medium in the housing 1 can be discharged through the side portion of the housing 1 and the end portion of the housing 1, thereby improving the pressure relief timeliness of the battery cell 10. If the part of the side wall 17 located in the second half region 14 and the first end wall 15 are each provided with the pressure relief mechanism 3, the discharge medium in the housing 1 can also be discharged through the side portion of the housing 1 and the end portion of the housing 1, thereby improving the pressure relief timeliness of the battery cell 10.

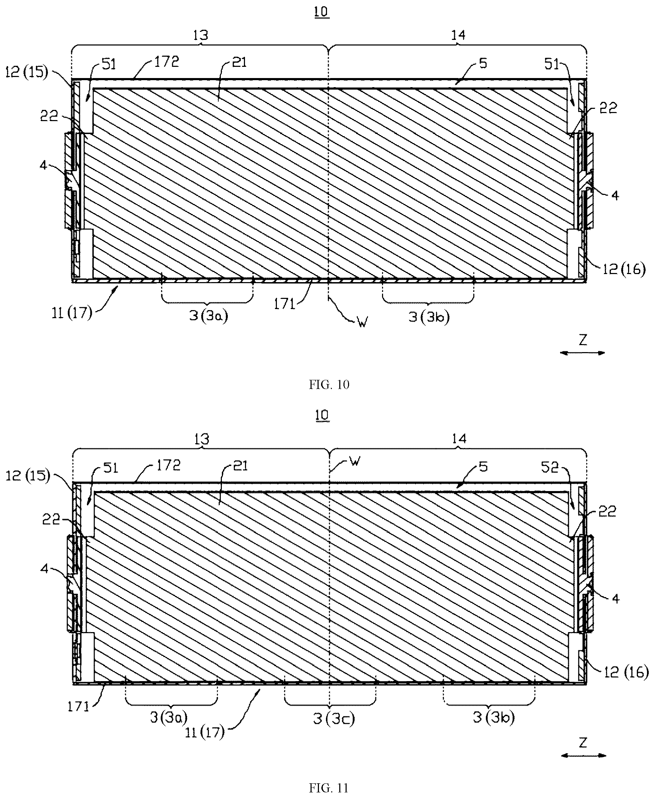

In some embodiments, referring to FIG. 10, FIG. 10 is a cross-sectional view of a battery cell 10 (with a cuboid housing 1) according to some embodiments of the present application. The battery cell 10 further includes an electrode assembly 2. The electrode assembly 2 is accommodated in the housing 1. The electrode assembly 2 includes a body portion 21 and a tab 22, at least one end of the body portion 21 along the length direction Z of the housing 1 is provided with the tab 22, a part of the body portion 21 is located in the first half region 13, and the other part of the body portion is located in the second half region 14. The side wall 17 includes a first wall portion 171 and a second wall portion 172 that are arranged opposite to each other, the first wall portion 171 is configured to support the body portion 21 along a gravity direction, a channel gap 5 is formed between the second wall portion 172 and the body portion 21, and the channel gap 5 is configured to communicate spaces located at two ends of the body portion 21 along the length direction Z of the housing 1 in the housing 1.

Along the length direction Z of the housing 1, the body portion 21 may be provided with the tab 22 at an end or may be provided with tabs 22 at two ends. As an example, in FIG. 10, the body portion 21 is provided with tabs 22 at two ends, where the tab 22 at an end is a positive electrode tab, and the tab 22 at the other end is a negative electrode tab. The first end wall 15 and the second end wall 16 are each provided with the electrode terminal 4, the electrode terminal 4 on the first end wall 15 is electrically connected to the tab 22 at an end of the body portion 21, and the electrode terminal 4 on the second end wall 16 is electrically connected to the tab 22 at the other end of the body portion 21.

The electrode assembly 2 may include a positive electrode plate, a negative electrode plate, and an isolation member, and the electrode assembly 2 may be a wound structure formed by winding the positive electrode plate, the isolation member, and the negative electrode plate, or may be a laminated structure formed by stacking the positive electrode plate, the isolation member, and the negative electrode plate. The body portion 21 may be a part that is in the electrode assembly 2 and corresponds to a region of a plate coated with an active substance layer. The positive electrode tab may be a part of the positive electrode plate not coated with a positive electrode active substance layer, and the negative electrode tab may be a part of the negative electrode plate not coated with a negative electrode active substance layer.

The first wall portion 171 and the second wall portion 172 are two opposite wall portions of the side wall 17, the first wall portion 171 is a wall portion of the side wall 17 that supports the body portion 21 along the gravity direction, the first wall portion 171 bears gravity of the body portion 21, and the first wall portion 171 and the second wall portion 172 are arranged opposite to each other in the gravity direction of the body portion 21. A thickness of the first wall portion 171 and a thickness of the second wall portion 172 may be the same. Alternatively, a thickness of the first wall portion 171 and a thickness of the second wall portion 172 may be different. For example, the thickness of the first wall portion 171 is greater than the thickness of the second wall portion 172. The first wall portion 171 may be in direct contact with the body portion 21 to support the body portion 21. Alternatively, an intermediate member may be arranged between the first wall portion 171 and the body portion 21, and the first wall portion 171 supports the body portion 21 through the intermediate member, where the intermediate member may be an insulating member arranged between the first wall portion 171 and the body portion 21.

The channel gap 5 is formed between the second wall portion 172 and the body portion 21, the spaces located at the two ends of the body portion 21 along the length direction Z of the housing 1 in the housing 1 are respectively a first space 51 and a second space 52, the channel gap 5 communicates the first space 51 with the second space 52, the first space 51 is located in the first half region 13, and the second space 52 is located in the second half region 14. When the battery cell 10 undergoes a thermal runaway, the discharge medium in one of the first space 51 and the second space 52 may flow to the other through the channel gap 5.

In this embodiment, the channel gap 5 is formed between the first wall portion 171 and the body portion 21 and the channel gap 5 communicates the spaces located at the two ends of the body portion 21 along the length direction Z of the housing 1 in the housing 1, so that when the battery cell 10 undergoes a thermal runaway, if pressure cannot be released through the pressure relief mechanism 3 in the first half region 13 in time, the discharge medium near the pressure relief mechanism 3 in the first half region 13 can flow to the pressure relief mechanism 3 in the second half region 14 through the channel gap 5 to be discharged through the pressure relief mechanism 3. Similarly, if pressure cannot be released through the pressure relief mechanism 3 in the second half region 14 in time, the discharge medium near the pressure relief mechanism 3 in the second half region 14 can flow to the pressure relief mechanism 3 in the first half region 13 through the channel gap 5 to be discharged through the pressure relief mechanism 3.

In some embodiments, still referring to FIG. 10, the first wall portion 171 is provided with at least one pressure relief mechanism 3.

The first wall portion 171 may be provided with one pressure relief mechanism 3 or may be provided with a plurality of pressure relief mechanisms 3.

When the battery cell 10 undergoes a thermal runaway, the discharge medium in the housing 1 can be discharged through a bottom portion of the battery cell 10.

In some embodiments, still referring to FIG. 10, the first wall portion 171 is provided with a plurality of pressure relief mechanisms 3, the plurality of pressure relief mechanisms 3 include a first pressure relief mechanism 3a and a second pressure relief mechanism 3b that are arranged on the first wall portion 171, the first pressure relief mechanism 3a is located in the first half region 13, and the second pressure relief mechanism 3b is located in the second half region 14.

The first wall portion 171 may be provided with only two pressure relief mechanisms 3, and the two pressure relief mechanisms 3 are respectively a first pressure relief mechanism 3a and a second pressure relief mechanism 3b. Alternatively, the first wall portion 171 may be provided with three or more pressure relief mechanisms 3, where two of the pressure relief mechanisms 3 are respectively a first pressure relief mechanism 3a and a second pressure relief mechanism 3b.

In this embodiment, if a thermal runaway region of the body portion 21 of the electrode assembly 2 is located in the first half region 13, a large amount of discharge media are accumulated near the first pressure relief mechanism 3a, and if the discharge media cannot be discharged in time through the first pressure relief mechanism 3a, the discharge media can flow to the second pressure relief mechanism 3a through the channel gap 5 and be discharged through the second pressure relief mechanism 3b, thereby improving the pressure relief timeliness of the battery cell 10; and if the thermal runaway region of the body portion 21 of the electrode assembly 2 is located in the second half region 14, a large amount of discharge media are accumulated near the second pressure relief mechanism 3b, and if the discharge media cannot be discharged in time through the second pressure relief mechanism 3b, the discharge media can flow to the first pressure relief mechanism 3a through the channel gap 5 and be discharged through the first pressure relief mechanism 3a, thereby improving the pressure relief timeliness of the battery cell 10.

In some embodiments, the first pressure relief mechanism 3a and the second pressure relief mechanism 3b are arranged symmetrically about the middle section W of the housing 1. By causing the first pressure relief mechanism 3a and the second pressure relief mechanism 3b to have the same pressure relief area and causing the first pressure relief mechanism 3a and the second pressure relief mechanism 3b to have the same distance to the middle section W of the housing 1 along the length direction Z, the first pressure relief mechanism 3a and the second pressure relief mechanism 3b both can play a good pressure relief function when the battery cell undergoes a thermal runaway.

In some embodiments, referring to FIG. 11, FIG. 11 is a cross-sectional view of a battery cell 10 according to some other embodiments of the present application. The plurality of pressure relief mechanisms 3 further include a third pressure relief mechanism 3c arranged on the first wall portion 171, a part of the third pressure relief mechanism 3c is located in the first half region 13, and the other part of the third pressure relief mechanism is located in the second half region 14.

In this embodiment, in addition to the first pressure relief mechanism 3a and the second pressure relief mechanism 3b arranged on the first wall portion 171, the third pressure relief mechanism 3c is further arranged on the first wall portion 171. The pressure relief mechanism 3 intersects with the middle section W, and the middle section W may divide the pressure relief mechanism 3 into two parts, where one part is located in the first half region 13, and the other part is located in the second half region 14.

In this embodiment, a middle region of the first wall portion 171 is also provided with a pressure relief mechanism 3, which is conducive to discharging of the discharge medium located in the middle region of the housing 1, thereby improving the pressure relief timeliness of the battery cell 10.

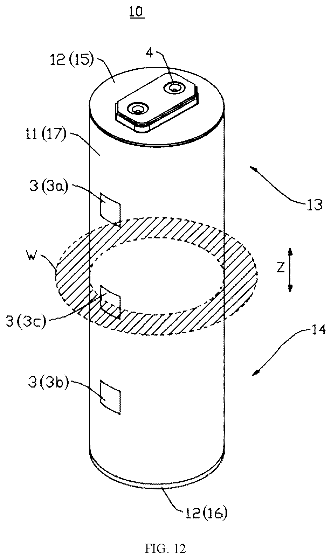

In some embodiments, referring to FIG. 11 and FIG. 12, FIG. 12 is an axonometric view of a battery cell 10 (with a cylindrical housing 1) according to some embodiments of the present application. The side wall 17 is provided with at least one pressure relief mechanism 3, a part of the at least one pressure relief mechanism 3 on the side wall 17 is located in the first half region 13, and the other part of the at least one pressure relief mechanism on the side wall is located in the second half region 14.

There may be one or a plurality of pressure relief mechanisms 3 whose one part is located in the first half region 13 and the other part is located in the second half region 14, and if there are a plurality of pressure relief mechanisms, the plurality of pressure relief mechanisms 3 may be arranged at intervals along a circumferential direction of the side wall 17.

In this embodiment, not only the first half region 13 and the second half region 14 of the housing 1 are provided with the pressure relief mechanisms 3, a middle region of the side wall 17 of the housing 1 is also provided with the pressure relief mechanism 3, thereby improving the pressure relief timeliness of the battery cell 10.

In some embodiments, still referring to FIG. 11 and FIG. 12, the side wall 17 is provided with a plurality of pressure relief mechanisms 3, the plurality of pressure relief mechanisms 3 include a first pressure relief mechanism 3a, a second pressure relief mechanism 3b, and a third pressure relief mechanism 3c, the first pressure relief mechanism 3a is located in the first half region 13, the second pressure relief mechanism 3b is located in the second half region 14, a part of the third pressure relief mechanism 3c is located in the first half region 13, and the other part of the third pressure relief mechanism is located in the second half region 14.

There may be one or a plurality of first pressure relief mechanisms 3a on the side wall 17. If there are a plurality of first pressure relief mechanisms 3a on the side wall 17, the plurality of first pressure relief mechanisms 3a may be arranged at intervals along the circumferential direction of the side wall 17 or may be arranged at intervals along the length direction Z of the housing 1. There may be one or a plurality of second pressure relief mechanisms 3b on the side wall 17. If there are a plurality of second pressure relief mechanisms 3b on the side wall 17, the plurality of second pressure relief mechanisms 3b may be arranged at intervals along the circumferential direction of the side wall 17 or may be arranged at intervals along the length direction Z of the housing 1. There may be one or a plurality of third pressure relief mechanisms 3c on the side wall 17. If there are a plurality of third pressure relief mechanisms 3c on the side wall 17, the plurality of third pressure relief mechanisms 3c may be arranged at intervals along the circumferential direction of the side wall 17.

In the embodiment shown in FIG. 11, the side wall 17 is cuboid. In the embodiment shown in FIG. 12, the side wall 17 is cylindrical.

In this embodiment, the first pressure relief mechanism 3a, the second pressure relief mechanism 3b, and the third pressure relief mechanism 3c are arranged on the side wall 17, so that the discharge medium in regions at two ends of an internal space of the housing 1 can be respectively discharged through the first pressure relief mechanism 3a and the second pressure relief mechanism 3b, and the discharge medium in the middle region can be discharged through the third pressure relief mechanism 3c, thereby improving the pressure relief timeliness of the battery cell 10.

In some embodiments, still referring to FIG. 10 to FIG. 12, the housing 1 includes a shell 11 and two end caps 12, where the shell 11 is provided with openings at two opposite ends along the length direction Z of the housing 1, and the two end caps 12 respectively close the openings at the two ends of the shell 11. The two end caps 12 are respectively the first end wall 15 and the second end wall 16.

It may be understood that, the shell 11 is a hollow structure provided with openings at two opposite ends, and the shell 11 is the side wall 17 of the housing 1.

It should be noted that, in this embodiment, the two end caps 12 may be both provided with the pressure relief mechanism 3, so that the pressure relief mechanism 3 is arranged in both the first half region 13 and the second half region 14; or one of the end caps 12 may be provided with the pressure relief mechanism 3, and the shell 11 is provided with the pressure relief mechanism 3, where the pressure relief mechanism 3 arranged on the end cap 12 may be located in the first half region 13 and the pressure relief mechanism 3 arranged on the shell 11 may be located in the second half region 14, or the pressure relief mechanism 3 arranged on the end cap 12 is located in the second half region 14 and the pressure relief mechanism 3 arranged on the shell 11 is located in the first half region 13; or the shell 11 may be provided with a plurality of pressure relief mechanisms 3, where a part of the pressure relief mechanisms 3 on the shell 11 are located in the first half region 13, and the other part of the pressure relief mechanisms 3 are located in the second half region 14.

In this embodiment, the shell 11 is a hollow structure provided with openings at two ends, and the electrode assembly 2 can enter the shell through the opening at any end of the shell 11, thereby improving the shell entering efficiency of the electrode assembly 2.

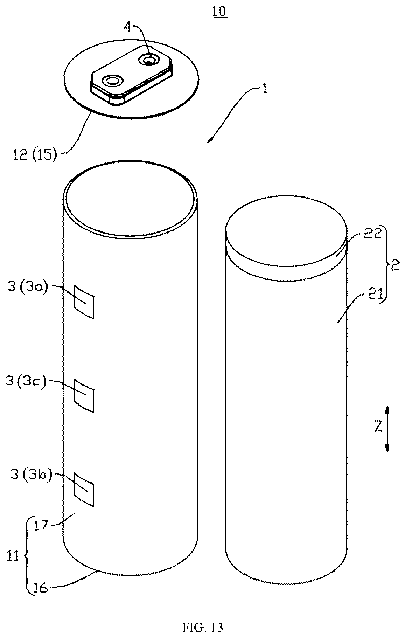

In some embodiments, referring to FIG. 13, FIG. 13 is an exploded view of a battery cell 10 (with a cylindrical housing 1) according to some embodiments of the present application. The housing 1 includes a shell 11 and an end cap 12, where the shell 11 is provided with an opening at an end along the length direction Z of the housing 1, and the end cap 12 closes the opening of the shell 11. The end cap 12 is the first end wall 15, and along the length direction Z of the housing 1, a wall portion of the shell 11 opposite to the end cap 12 is the second end wall 16.

It may be understood that, the shell 11 is a hollow structure provided with an opening at an end, and the side wall 17 and the second end wall 16 of the housing 1 form the shell 11.

It should be noted that, in this embodiment, the end cap 12 and the wall portion of the shell 11 opposite to the end cap 12 may be provided with the pressure relief mechanism 3, so that the pressure relief mechanism 3 is arranged in both the first half region 13 and the second half region 14; or the end cap 12 and the shell 11 may be provided with the pressure relief mechanism 3, where the end cap 12 and the side wall 17 may be provided with the pressure relief mechanism 3, the pressure relief mechanism 3 on the end cap 12 is located in the first half region 13 (not shown in FIG. 13), and the pressure relief mechanism 3 on the side wall 17 is located in the second half region 14; or the wall portion of the shell 11 opposite to the end cap 12 and the side wall 17 may be provided with the pressure relief mechanism 3, where the pressure relief mechanism 3 on the wall portion of the shell 11 opposite to the end cap 12 is located in the second half region 14, and the pressure relief mechanism 3 on the side wall 17 is located in the first half region 13 (not shown in FIG. 13); or the side wall 17 of the shell 11 may be provided with a plurality of pressure relief mechanisms 3, where a part of the pressure relief mechanisms 3 on the side wall 17 are located in the first half region 13, and the other part of the pressure relief mechanisms 3 are located in the second half region 14.

As an example, in FIG. 13, the side wall 17 of the shell 11 is provided with the first pressure relief mechanism 3a, the second pressure relief mechanism 3b, and the third pressure relief mechanism 3c, where the first pressure relief mechanism 3a is located in the first half region 13, the second pressure relief mechanism 3b is located in the second half region 14, a part of the third pressure relief mechanism 3c is located in the first half region 13, and the other part of the third pressure relief mechanism is located in the second half region 14.

In this embodiment, the shell 11 is a hollow structure provided with an opening at an end, the electrode assembly 2 is accommodated in the shell 11, and assembly of the battery cell 10 can be completed by closing the opening of the shell 11 through the end cap 12, thereby effectively reducing the assembly difficulty of the battery cell 10.

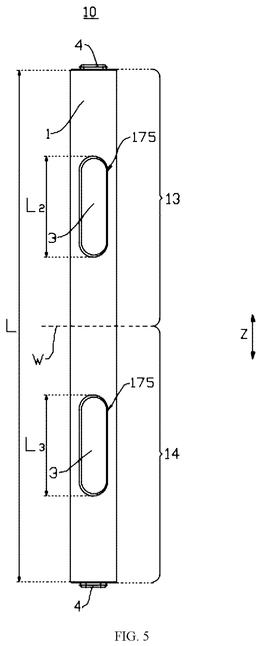

In some embodiments, still referring to FIG. 5, the housing 1 includes a first wall portion 171, the first wall portion 171 is provided with a plurality of pressure relief mechanisms 3 that are arranged at intervals along the length direction Z, the pressure relief mechanism 3 is provided with a scored groove 175, and along the length direction, a sum of maximum spans of the scored grooves 175 of the plurality of pressure relief mechanisms 3 is L₁ and meets: 0.2≤L₁/L≤0.6.

The maximum span of the scored groove 175 along the length direction Z is a distance between two farthest positions of the scored groove 175 along the length direction Z. The maximum spans of the scored grooves 175 of all the pressure relief mechanisms 3 on the first wall portion 171 along the length direction Z may be the same, or the maximum spans of the scored grooves 175 of at least two pressure relief mechanisms 3 on the first wall portion 171 along the length direction Z may be different. The scored groove 175 may be a groove extending along a closed track, where the closed track may be circular, rectangular, or the like. The scored groove 175 may alternatively be a groove extending along a non-closed track, where the non-closed track may be linear, arc-shaped, U-shaped, H-shaped, V-shaped, L-shaped, or Y-shaped. The scored groove 175 may be provided on an inner side of the pressure relief mechanism 3 (a side of the pressure relief mechanism 3 facing the inside of the housing 1 along a thickness direction of the first wall portion), or may be provided on an outer side of the pressure relief mechanism 3 (a side of the pressure relief mechanism 3 facing away from the inside of the housing 1 along the thickness direction of the first wall portion). It should be noted that, in the plurality of pressure relief mechanisms 3 on the first wall portion 171, the scored grooves 175 of a part of the pressure relief mechanisms 3 may be provided on the inner sides of the pressure relief mechanisms 3, and the scored grooves 175 of the other part of the pressure relief mechanisms 3 may be provided on the outer sides of the pressure relief mechanisms 3, or the scored grooves 175 of all the pressure relief mechanisms 3 may be provided on the inner sides of the pressure relief mechanisms 3, or the scored grooves 175 of all the pressure relief mechanisms 3 may be provided on the outer sides of the pressure relief mechanisms 3.

In an embodiment that the side wall 17 of the housing 1 is a cuboid hollow structure, the first wall portion 171 may be any wall portion of the side wall 17. As an example, in FIG. 5, the first wall portion 171 is a wall portion of the side wall 17 that supports the body portion 21 along a gravity direction. In an embodiment that the side wall 17 of the housing 1 is a cylindrical hollow structure, the entire side wall 17 may be used as the first wall portion 171.

An example in which the first wall portion 171 is provided with only two pressure relief mechanisms 3 is used, the maximum span of the scored groove 175 of one pressure relief mechanism 3 along the length direction Z is L₂, the maximum span of the scored groove 175 of the other pressure relief mechanism 3 along the length direction Z is L₃, and L₁=L₂+L₃.

L₁/L may be any one or a range value between any two values of 0.2, 0.23, 0.25, 0.28, 0.3, 0.33, 0.35, 0.38, 0.4, 0.43, 0.45, 0.48, 0.5, 0.53, 0.55, 0.58, or 0.6.

In this embodiment, L₁/L≥0.2, so that the sum of the maximum spans of the scored grooves 175 of the plurality of pressure relief mechanisms 3 on the first wall portion 171 along the length direction Z is relatively large, so that a total pressure relief area of the plurality of pressure relief mechanisms 3 on the first wall portion 171 can be increased, helping improve a pressure relief rate of the battery cell 10. L₁/L≤ 0.6, so that the sum of the maximum spans of the scored grooves 175 of the plurality of pressure relief mechanisms 3 on the first wall portion 171 along the length direction Z is not excessively large, helping improve a strength of the first wall portion 171.

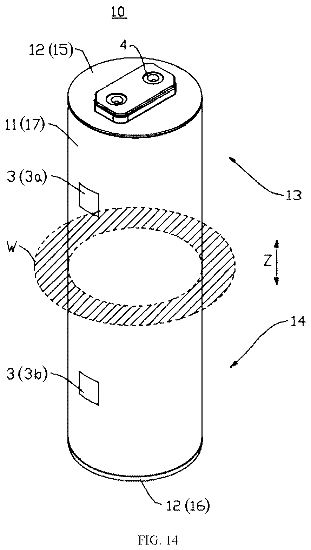

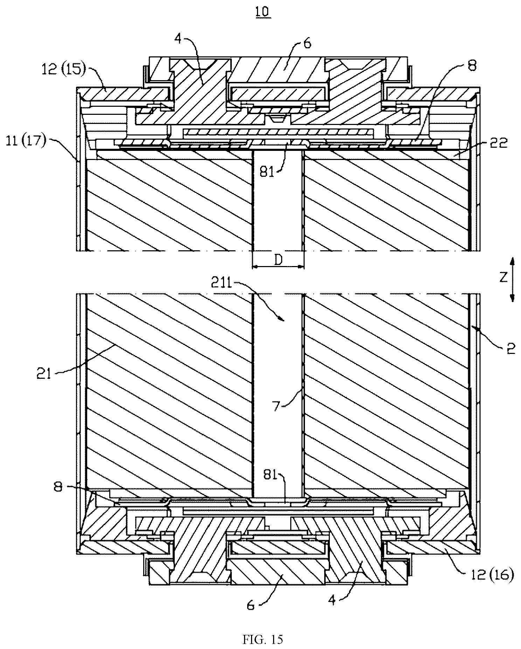

In some embodiments, referring to FIG. 14 and FIG. 15, FIG. 14 is an axonometric view of a battery cell 10 (with a cylindrical housing 1) according to some other embodiments of the present application; and FIG. 15 is a cross-sectional view of a battery cell 10 (with a cylindrical housing 1) according to some embodiments of the present application. The battery cell 10 further includes an electrode assembly 2. The electrode assembly 2 is accommodated in the housing 1. The electrode assembly 2 includes a body portion 21 and a tab 22, at least one end of the body portion 21 along the length direction Z of the housing 1 is provided with the tab 22, a part of the body portion 21 is located in the first half region 13, and the other part of the body portion is located in the second half region 14. The body portion 21 is provided with a central hole 211, along the length direction Z of the housing 1, the central hole 211 runs through the body portion 21, and the central hole 211 is configured to communicate an internal space of the first half region 13 with an internal space of the second half region 14.

In this embodiment, the housing 1 may be in a shape of a cylinder or a prism. The pressure relief mechanism 3 located in the first half region 13 may be arranged on the first end wall 15 or may be arranged on the side wall 17; and the pressure relief mechanism 3 located in the second half region 14 may be arranged on the second end wall 16 or may be arranged on the side wall 17. As an example, as shown in FIG. 14, the side wall 17 is provided with two pressure relief mechanisms which are respectively a first pressure relief mechanism 3a and a second pressure relief mechanism 3b, where the first pressure relief mechanism 3a is arranged in the first half region 13, and the second pressure relief mechanism 3b is arranged in the second half region 14.

Along the length direction Z of the housing 1, an end of the central hole 211 extends to an end of the body portion 21, and the end of the central hole 211 extends to the other end of the body portion 21, to run through the body portion 21. The central hole 211 may be a circular hole or a polygonal hole. A cross section of a hole wall surface of the circular hole is a circle, and a cross section of a hole wall surface of the polygonal hole is a polygon, where the polygon herein may be a triangle, a quadrangle, a pentagon, or a hexagon, and the cross section is perpendicular to the length direction Z of the housing 1. The tab 22 at an end portion of the body portion 21 does not block the central hole 211. The electrode assembly 2 may be a wound structure formed by winding a positive electrode plate, an isolation member, and a negative electrode plate. After the electrode assembly 2 is formed in a winding manner, the central hole 211 is correspondingly formed at a central position of the electrode assembly 2. The electrode assembly 2 may alternatively be a laminated structure formed by stacking a positive electrode plate, an isolation member, and a negative electrode plate, and the central hole 211 may be processed at a central position of the electrode assembly 2.

As an example, as shown in FIG. 15, along the length direction Z of the housing 1, two ends of the body portion 21 are provided with tabs 22, and electrode terminals 4 are arranged on the first end wall 15 and the second end wall 16, where the tab 22 at an end of the body portion 21 is electrically connected to the electrode terminal 4 on the first end wall 15, the tab 22 at the other end of the body portion 21 is electrically connected to the electrode terminal 4 on the second end wall 16, and a polarity of the electrode terminal 4 on the first end wall 15 is opposite to a polarity of the electrode terminal 4 on the second end wall 16. Optionally, two electrode terminals 4 are arranged on the first end wall 15, where the two electrode terminals 4 are connected through one connecting block 6, and the connecting block 6 is located on a side of the first end wall 15 facing away from the body portion 21; and two electrode terminals 4 are arranged on the second end wall 16, where the two electrode terminals 4 are connected through another connecting block 6, and the connecting block 6 is located on a side of the second end wall 16 facing away from the body portion 21. The connecting block 6 is a conductor and may be made of a material such as copper, iron, aluminum, aluminum alloy, or steel.

In this embodiment, the central hole 211 of the body portion 21 may be used as a flow channel of the discharge medium in the housing 1, the discharge medium at an end of the body portion 21 can be discharged through the pressure relief mechanism 3 in the first half region 13 or can flow to the other end of the body portion 21 through the central hole 211 and be discharged through the pressure relief mechanism 3 in the second half region 14, thereby improving the pressure relief timeliness of the battery cell 10.

In some embodiments, still referring to FIG. 15, the battery cell 10 further includes a support member 7, and the support member 7 is arranged in the central hole 211 and supported on a hole wall surface of the central hole 211.

The support member 7 is in contact with the hole wall surface of the central hole 211 and supports the hole wall surface. The support member 7 may be made of a metal material such as copper, iron, aluminum, aluminum alloy, or steel; or the support member 7 may be made of a non-metal material such as plastic or rubber. A channel keeping the central hole 211 smooth may be formed in the support member 7, and the support member 7 may be a hollow cylindrical member or may be a wound member wound in the central hole 211. The support member 7 may be fixed to the hole wall surface, so that the support member 7 is in contact with the hole wall surface of the central hole 211.

In this embodiment, through arrangement of the support member 7, a collapse risk of the central hole 211 may be reduced. On one hand, the central hole 211 can be kept smooth, so that the discharge medium at an end of the body portion 21 can flow to the other end of the body portion 21 through the central hole 211; and on the other hand, a risk of lithium precipitation caused by collapse of the central hole 211 can be reduced.

In some embodiments, the support member 7 is an adhesive layer adhered to the hole wall surface of the central hole 211.

The adhesive layer may be a solid layer formed through solidification of glue coated on the hole wall surface or may be an adhesive tape or an adhesive strip adhered to the hole wall surface.

In this embodiment, the support member 7 is not easily separated from the hole wall surface of the central hole 211, so that the support member 7 can play a better support reinforcement function on the central hole 211.

In some embodiments, the electrode assembly 2 includes a positive electrode plate, a negative electrode plate, and an isolation member, the isolation member is arranged between the positive electrode plate and the negative electrode plate, the positive electrode plate, the isolation member, and the negative electrode plate are wound to form a wound structure, the isolation member defines the central hole 211, and the support member 7 is connected to the isolation member.

It may be understood that, the hole wall surface of the central hole 211 is a part of a surface of the isolation member.

The support member 7 and the isolation member may be connected in a plurality of connection manners, for example, hot-melting connection or bonding. An example in which the isolation member is an adhesive layer is used, the support member 7 is bonded to the isolation member. As an example, the support member 7 is a wound member wound in the central hole 211.

In this embodiment, before the electrode assembly 2 is formed, the support member 7 may be first connected to the isolation member, so that after the positive electrode plate, the isolation member, and the negative electrode plate are wound to form the electrode assembly 2, the support member 7 is located in the central hole 211 and supports the hole wall surface of the central hole 211. In this way, the difficulty in arranging the support member 7 in the central hole 211 can be reduced.

In other embodiments, the central hole 211 may be defined by the positive electrode plate or the negative electrode plate, and the support member 7 is connected to the positive electrode plate or the negative electrode plate.

In some embodiments, a diameter of the central hole 211 is D and meets: 3 mm≤D≤8 mm.

It should be noted that, in an embodiment that the central hole 211 is a circular hole, a diameter of a cross section of the hole wall surface of the central hole 211 is the diameter of the central hole 211; or in an embodiment that the central hole 211 is a polygonal hole, a diameter of a circumscribed circle of a cross section of the hole wall surface of the central hole 211 is the diameter of the central hole 211.

D may be any one or a range value between any two values of 3 mm, 4 mm, 5 mm, 6 mm, 7 mm, or 8 mm.

In this embodiment, D≥3 mm, so that the central hole 211 has a relatively large hole diameter, and the discharge medium located at an end of the body portion 21 in the housing 1 can flow to the other end of the body portion 21 through the central hole 211 more quickly; and D≤8 mm, so that the hole diameter of the central hole 211 is not excessively large, thereby reducing a collapse risk of the central hole 211.

In some embodiments, still referring to FIG. 15, the battery cell 10 further includes an electrode terminal 4 and a current collector 8, the electrode terminal 4 is arranged on the housing 1, the current collector 8 is arranged on a side of the body portion 21 facing the electrode terminal 4, the current collector 8 connects the electrode terminal 4 to the tab 22, the current collector 8 is provided with a first through hole 81, and the first through hole 81 is in communication with the central hole 211.

The current collector 8 may be a metal conductor, for example, copper, iron, aluminum, steel, or aluminum alloy. The current collector 8 may be a current collecting plate arranged between the electrode terminal 4 and the tab 22, or may be an adapting piece folded between the electrode terminal 4 and the tab 22. The first through hole 81 may be a circular hole or a polygonal hole.

As an example, in the embodiment shown in FIG. 15, along the length direction Z of the housing 1, the tab 22 at an end of the body portion 21 is connected to the electrode terminal 4 on the first end wall 15 through one current collector 8, and the tab 22 at the other end of the body portion 21 is connected to the electrode terminal 4 on the second end wall 16 through another current collector 8, so that the electrode terminals 4 on the first end wall 15 and the second end wall 16 are electrically connected to the electrode assembly 2.

In this embodiment, the current collector 8 is provided with the first through hole 81, so that the current collector 8 is less likely to block the central hole 211, and the discharge medium entering the central hole 211 can smoothly flow to the pressure relief mechanism 3.

In some embodiments, still referring to FIG. 15, a projection of a hole wall surface of the first through hole 81 along the length direction Z of the housing 1 is at least partially located in the central hole 211.

As an example, the first through hole 81 and the central hole 211 are both circular holes, the first through hole 81 and the central hole 211 are coaxially provided, and a diameter of the first through hole 81 is less than the diameter of the central hole 211, so that the projection of the hole wall surface of the first through hole 81 along the length direction Z of the housing 1 is totally located in the central hole 211.

In this embodiment, the projection of the hole wall surface of the first through hole 81 is at least partially located in the central hole 211, so that blocking of the current collector 8 to the discharge medium in the central hole 211 can be reduced, and the discharge medium in the central hole 211 can flow to the pressure relief mechanism 3 quickly through the first through hole 81.

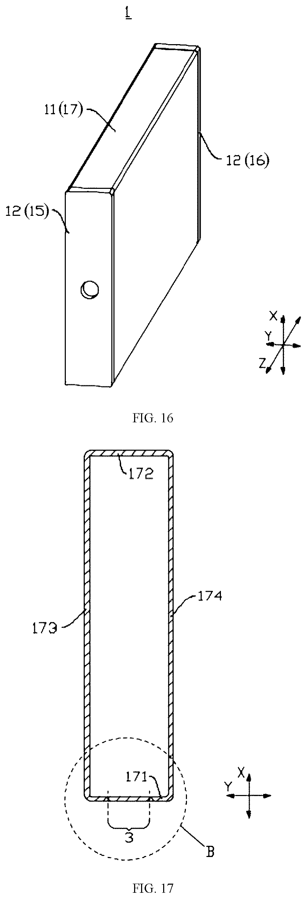

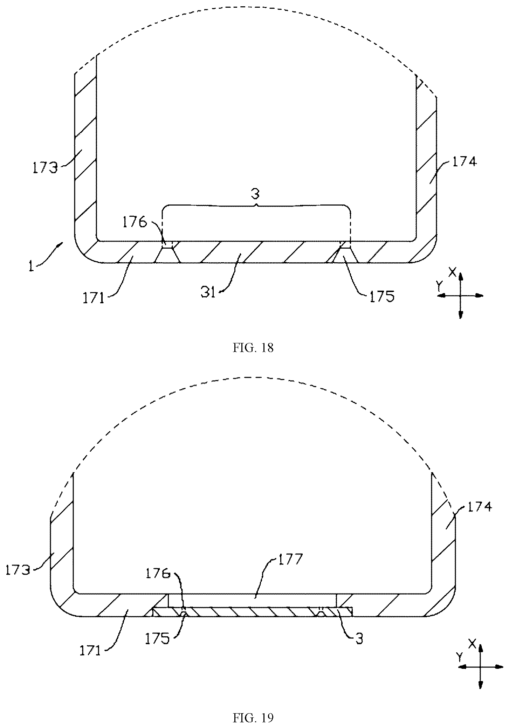

In some embodiments, referring to FIG. 16 to FIG. 18, FIG. 16 is an axonometric view of a housing 1 according to some embodiments of the present application; FIG. 17 is a cross-sectional view of the housing 1 shown in FIG. 16; and FIG. 18 is a partial enlarged view of the housing 1 shown in FIG. 17 at a position B. The pressure relief mechanism 3 is provided with a scored groove 175, a weak region 176 is formed at a region in which the scored groove 175 is provided of the pressure relief mechanism 3, and the weak region 176 is configured to be crackable to release internal pressure of the battery cell 10.

The weak region 176 is a part having a lower strength than other regions in the pressure relief mechanism 3. After the scored groove 175 is formed on the pressure relief mechanism 3, a remaining part on the pressure relief mechanism 3 corresponding to the region of the scored groove 175 is the weak region 176. For example, a groove bottom wall of the scored groove 175 is the weak region 176.

The scored groove 175 may be formed in manner manners, for example, stamping, milling, or laser etching. An extending direction of the scored groove 175 is the same as an extending direction of the weak region 176.

In this embodiment, the weak region 176 is formed in the corresponding region of the pressure relief mechanism 3 by providing the scored groove 175, and the manner of forming the weak region 176 is simple. The weak region 176 is a weaker region in the pressure relief mechanism 3, and the weak region 176 is more likely to be damaged when the battery cell 10 undergoes a thermal runaway, to release the internal pressure of the battery cell 10.

In some embodiments, the pressure relief mechanism 3 includes a pressure relief region 31, the weak region 176 is arranged along an edge of the pressure relief region 31, and the pressure relief region 31 is configured to be openable when the weak region 176 cracks.

The pressure relief region 31 is a part that can be opened after the pressure relief mechanism 3 cracks along the weak region 176. During pressure releasing, the pressure relief region 31 may be opened in a turned-over or separated manner.

In this embodiment, the scored groove 175 may be a groove extending along a closed track. The scored groove 175 may alternatively be a groove extending along a non-closed track, where the non-closed track may be arc-shaped, U-shaped, H-shaped, V-shaped, or L-shaped.

In this embodiment, the weak region 176 defines the pressure relief region 31, and during pressure releasing, the pressure relief region 31 can be opened by using the weak region 176 as a boundary, thereby increasing a pressure relief area of the pressure relief mechanism 3.

In some embodiments, the scored groove 175 is a groove extending along a closed track.

The scored groove 175 is an annular groove, and the annular groove may be a rectangular annular groove or a circular annular groove. The rectangular annular groove is a groove extending along a rectangular track, and the circular annular groove is a groove extending along a circular track.

During pressure releasing, the pressure relief region 31 may be separated from the housing 1 after the pressure relief mechanism 3 cracks along the scored groove 175, thereby increasing a pressure relief area and improving a pressure relief rate of the battery cell 10.

In some embodiments, still referring to FIG. 16 to FIG. 18, the pressure relief mechanism 3 and a wall portion corresponding to the housing 1 are integrally formed.

In an embodiment that the first end wall 15 is provided with the pressure relief mechanism 3, the pressure relief mechanism 3 on the first end wall 15 and the first end wall 15 are integrally formed. In an embodiment that the second end wall 16 is provided with the pressure relief mechanism 3, the pressure relief mechanism 3 on the second end wall 16 and the second end wall 16 are integrally formed. In an embodiment that the side wall 17 is provided with the pressure relief mechanism 3, and the pressure relief mechanism 3 on the side wall 17 and a wall portion corresponding to the side wall 17 are integrally formed. If the side wall 17 is cylindrical, the pressure relief mechanism 3 and the side wall 17 are integrally formed; or if the side wall 17 is cuboid, a wall portion of the side wall 17 provided with the pressure relief mechanism 3 and the pressure relief mechanism 3 are integrally formed.

As an example, as shown in FIG. 16 to FIG. 18, the side wall 17 includes a first wall portion 171, a second wall portion 172, a third wall portion 173, and a fourth wall portion 174, where the first wall portion 171 and the second wall portion 172 are arranged opposite to each other along a first direction X, the third wall portion 173 and the fourth wall portion 174 are arranged opposite to each other along a second direction Y, the first wall portion 171, the third wall portion 173, the second wall portion 172, and the fourth wall portion 174 are sequentially connected end to end, and every two of the length direction Z of the housing 1, the first direction X, and the second direction Y are perpendicular. The third wall portion 173 and the fourth wall portion 174 may be wall portions with a largest outer surface area in the housing 1, the first wall portion 171 may be configured to support the body portion 21 (not shown in FIG. 17) along the gravity direction, and the first direction X is parallel to the gravity direction. The first wall portion 171 is provided with the pressure relief mechanism 3, and the pressure relief mechanism 3 and the first wall portion 171 are integrally formed.

In an embodiment that the pressure relief mechanism 3 is provided with the scored groove 175, the weak region 176 and the pressure relief region 31 may form the pressure relief mechanism, and the weak region 176, the pressure relief region 31, and the wall portion corresponding to the housing 1 are integrally formed, so that the pressure relief mechanism 3 and the wall portion corresponding to the housing 1 may be integrally formed.

In this embodiment, the pressure relief mechanism 3 and the wall portion corresponding to the housing 1 are integrally formed, so that the pressure relief mechanism 3 has higher reliability, and a process of connecting the pressure relief mechanism 3 to the housing 1 is omitted, thereby reducing production costs of the battery cell 10.

In some embodiments, referring to FIG. 19, FIG. 19 is a partial enlarged view of a housing 1 according to some other embodiments of the present application. The pressure relief mechanism 3 and the housing 1 are separately arranged, the housing 1 is provided with a pressure relief hole 177, and the pressure relief mechanism 3 is mounted on the housing 1 and covers the pressure relief hole 177.

The pressure relief mechanism 3 and the housing 1 are two independent components, and are separated formed and then assembled together. The pressure relief mechanism 3 may be a component such as an anti-explosion piece, an anti-explosion valve, or a safety valve. An example in which the first wall portion 171 of the housing is provided with the pressure relief mechanism 3 is used, the pressure relief mechanism 3 may be mounted on the first wall portion 171 in a bonding or welding manner. When the battery cell 10 undergoes a thermal runaway, the pressure relief mechanism 3 opens at least a part of the pressure relief hole 177, and the discharge medium in the battery cell 10 is discharged through the pressure relief hole 177, to release the internal pressure of the battery cell 10.

As an example, as shown in FIG. 19, the pressure relief mechanism 3 is an anti-explosion piece, the anti-explosion piece is mounted on the first wall portion 171, the anti-explosion piece is a piece in which a strength of at least a partial region is less than a strength of the first wall portion 171, the anti-explosion piece covers the pressure relief hole 177, and the anti-explosion piece is welded to the first wall portion 171. When the battery cell 10 undergoes a thermal runaway, at least a part of the anti-explosion piece is damaged, so that the at least a part of the pressure relief hole 177 is opened, to release the internal pressure of the battery cell 10. The pressure relief mechanism 3 may be provided with the scored groove 175, to correspondingly form the weak region 176.

In this embodiment, the pressure relief mechanism 3 is a component independent of the housing 1, and the pressure relief mechanism 3 and the housing 1 may be separately produced and then assembled, which has low production difficulty and high efficiency.

In some embodiments, referring to FIG. 3 to FIG. 11, the housing 1 is cuboid.

In some embodiments, referring to FIG. 12 to FIG. 15, the housing 1 is cylindrical, and an axial direction of the housing 1 is parallel to the length direction Z.

In some embodiments, L≥160 mm.

L may be any one or a range value between any two values of 160 mm, 170 mm, 180 mm, 190 mm, 200 mm, 210 mm, 220 mm, 230 mm, 240 mm, 250 mm, 260 mm, 270 mm, 280 mm, 290 mm, 300 mm, 310 mm, 320 mm, 330 mm, 340 mm, 350 mm, 360 mm, 370 mm, 380 mm, 390 mm, 400 mm, 410 mm, 420 mm, 430 mm, 440 mm, 450 mm, 460 mm, 470 mm, 480 mm, 490 mm, 500 mm, 510 mm, 520 mm, 530 mm, 540 mm, 550 mm, 560 mm, 570 mm, 580 mm, 590 mm, or 600 mm.

In a case that the length of the housing 1 is greater than or equal to 160 mm, it is more difficult for the battery cell 10 to release pressure in time during a thermal runaway. However, in this embodiment, by arranging the pressure relief mechanism 3 in both the first half region 13 and the second half region 14 of the housing 1, a case that pressure is not released from the battery cell 10 in time can be alleviated.

An embodiment of the present application provides a battery 100, including the battery cell 10 according to any one of the foregoing embodiments.

An embodiment of the present application provides a power consuming device, including the battery cell 10 according to any one of the foregoing embodiments, where the battery cell 10 is configured to provide electric energy to the power consuming device.

In addition, as shown in FIG. 14 and FIG. 15, an embodiment of the present application further provides a battery cell 10, including a housing 1, an electrode assembly 2, a pressure relief mechanism 3, and a current collector 8. The housing 1 is cylindrical, and the housing 1 includes a first half region 13 and a second half region 14. Along a length direction Z of the housing 1, a part from a middle section W of the housing 1 to an end of the housing 1 is the first half region 13, a part from the middle section W of the housing 1 to the other end of the housing 1 is the second half region 14, a length of the housing 1 is L, and L≥80 mm. The housing 1 includes a shell 11 and two end caps 12, where along the length direction Z of the housing 1, the shell 11 is provided with openings at two opposite ends, the two end caps 12 respectively close the two openings of the shell 11, the shell 11 is provided with a first pressure relief mechanism 3a and a second pressure relief mechanism 3b, the first pressure relief mechanism 3a is located in the first half region 13, and the second pressure relief mechanism 3b is located in the second half region 14. The electrode assembly 2 includes a body portion 21 and a tab 22, where along the length direction Z of the housing 1, the body portion 21 is provided with tabs 22 at two opposite ends, a part of the body portion 21 is located in the first half region 13, and the other part of the body portion is located in the second half region 14. The two end caps 12 are provided with electrode terminals 4, the tab 22 at an end of the body portion 21 is electrically connected to the electrode terminal 4 on one end cap 12 through one current collector 8, and the tab 22 at the other end of the body portion 21 is electrically connected to the electrode terminal 4 on the other end cap 12 through another current collector 8.

The electrode assembly 2 includes a positive electrode plate, a negative electrode plate, and an isolation member, where the positive electrode plate, the isolation member, and the negative electrode plate are wound to form a wound structure. The body portion 21 has a central hole 211, the central hole 211 runs through the body portion 21 along the length direction Z of the housing 1, the isolation member defines the central hole 211, and the central hole 211 is configured to communicate an internal space of the first half region 13 with an internal space of the second half region 14. A support member 7 is arranged in the central hole 211, the support member 7 is supported on a hole wall surface of the central hole 211, and the support member 7 is an adhesive layer adhered to the hole wall surface of the central hole 211. A diameter of the central hole 211 is D, and 3 mm≤D≤8 mm. The two current collectors 8 are each provided with a first through hole 81, the first through hole 81 is in communication with the central hole 211, the first through hole 81 and the central hole 211 are circular holes, the first through hole 81 and the central hole 211 are coaxially provided, and a diameter of the first through hole 81 is less than the diameter of the central hole 211.

It should be noted that, the embodiments in the present application and features in the embodiments can be mutually combined in a case without conflict.

The foregoing embodiments are merely used for describing the technical solutions of the present application and are not intended to limit the present application. For a person skilled in the art, the present application may have various modifications and changes. Any modification, equivalent replacement, or improvement made within the spirit and principle of the present application shall fall within the protection scope of the present application.

## Claims

1. A battery cell, comprising:
a housing, comprising a first half region and a second half region, wherein along a length direction of the housing, a part from a middle section of the housing to an end of the housing is the first half region, a part from the middle section of the housing to the other end of the housing is the second half region, a length of the housing is L, L≥80 mm, and the middle section is perpendicular to the length direction; and
an electrode assembly, accommodated in the housing, wherein the electrode assembly comprises a body portion and a tab, at least one end of the body portion along the length direction is provided with the tab, a part of the body portion is located in the first half region, and the other part of the body portion is located in the second half region, wherein
the first half region and the second half region are each provided with at least one pressure relief mechanism, the body portion is provided with a central hole, along the length direction, the central hole runs through the body portion, and the central hole is configured to communicate an internal space of the first half region with an internal space of the second half region.

2. The battery cell according to claim 1, wherein the housing has a first end wall, a second end wall, and a side wall, the first end wall is located in the first half region, the second end wall is located in the second half region, the first end wall and the second end wall are arranged opposite to each other along the length direction, and the side wall is arranged around the first end wall and the second end wall;
the first end wall and the second end wall are each provided with at least one pressure relief mechanism; and/or a part of the side wall located in the first half region and a part of the side wall located in the second half region are each provided with at least one pressure relief mechanism; and/or the part of the side wall located in the first half region and the second end wall are each provided with at least one pressure relief mechanism; and/or the part of the side wall located in the second half region and the first end wall are each provided with at least one pressure relief mechanism.

3. The battery cell according to claim 2, wherein the side wall comprises a first wall portion and a second wall portion that are arranged opposite to each other, the first wall portion is configured to support the body portion along a gravity direction, a channel gap is formed between the second wall portion and the body portion, and the channel gap is configured to communicate spaces located at two ends of the body portion along the length direction in the housing.

4. The battery cell according to claim 3, wherein the first wall portion is provided with at least one pressure relief mechanism.

5. The battery cell according to claim 4, wherein the first wall portion is provided with a plurality of pressure relief mechanisms, the plurality of pressure relief mechanisms comprise a first pressure relief mechanism and a second pressure relief mechanism that are arranged on the first wall portion, the first pressure relief mechanism is located in the first half region, and the second pressure relief mechanism is located in the second half region.

6. The battery cell according to claim 5, wherein the first pressure relief mechanism and the second pressure relief mechanism are arranged symmetrically about the middle section of the housing.

7. The battery cell according to claim 5 or 6, wherein the plurality of pressure relief mechanisms further comprise a third pressure relief mechanism arranged on the first wall portion, a part of the third pressure relief mechanism is located in the first half region, and the other part of the third pressure relief mechanism is located in the second half region.

8. The battery cell according to any one of claims 2 to 7, wherein the side wall is provided with at least one pressure relief mechanism, a part of the at least one pressure relief mechanism on the side wall is located in the first half region, and the other part of the at least one pressure relief mechanism on the side wall is located in the second half region.

9. The battery cell according to claim 8, wherein the side wall is provided with a plurality of pressure relief mechanisms, the plurality of pressure relief mechanisms comprise a first pressure relief mechanism, a second pressure relief mechanism, and a third pressure relief mechanism, the first pressure relief mechanism is located in the first half region, the second pressure relief mechanism is located in the second half region, a part of the third pressure relief mechanism is located in the first half region, and the other part of the third pressure relief mechanism is located in the second half region.

10. The battery cell according to any one of claims 2 to 9, wherein the housing comprises:
a shell, provided with openings at two opposite ends along the length direction; and
two end caps, respectively closing the openings at two ends of the shell, wherein
the two end caps are respectively the first end wall and the second end wall.

11. The battery cell according to any one of claims 2 to 9, wherein the housing comprises:
a shell, provided with an opening at an end along the length direction; and
an end cap, closing the opening, wherein
the end cap is the first end wall, and along the length direction, a wall portion of the shell opposite to the end cap is the second end wall.

12. The battery cell according to any one of claims 1 to 11, wherein the housing comprises a first wall portion, the first wall portion is provided with a plurality of pressure relief mechanisms that are arranged at intervals along the length direction, the pressure relief mechanism is provided with a scored groove, and along the length direction, a sum of maximum spans of the scored grooves of the plurality of pressure relief mechanisms is L₁ and meets: 0.2≤L₁/L≤0.6.

13. The battery cell according to any one of claims 1 to 11, wherein the battery cell further comprises a support member, and the support member is arranged in the central hole and supported on a hole wall surface of the central hole.

14. The battery cell according to claim 13, wherein the support member is an adhesive layer adhered to a hole wall surface of the central hole.

15. The battery cell according to claim 13 or 14, wherein the electrode assembly comprises a positive electrode plate, a negative electrode plate, and an isolation member, the isolation member is arranged between the positive electrode plate and the negative electrode plate, the positive electrode plate, the isolation member, and the negative electrode plate are wound to form a wound structure, the isolation member defines the central hole, and the support member is connected to the isolation member.

16. The battery cell according to any one of claims 1 to 15, wherein a diameter of the central hole is D and meets: 3 mm≤D≤8 mm.

17. The battery cell according to any one of claims 1 to 15, wherein the battery cell further comprises an electrode terminal and a current collector, the electrode terminal is arranged on the housing, the current collector is arranged on a side of the body portion facing the electrode terminal, the current collector connects the electrode terminal to the tab, the current collector is provided with a first through hole, and the first through hole is in communication with the central hole.

18. The battery cell according to claim 17, wherein a projection of a hole wall surface of the first through hole along the length direction is at least partially located in the central hole.

19. The battery cell according to any one of claims 1 to 18, wherein the pressure relief mechanism and a wall portion corresponding to the housing are integrally formed.

20. The battery cell according to any one of claims 1 to 18, wherein the pressure relief mechanism and the housing are separately arranged, the housing is provided with a pressure relief hole, and the pressure relief mechanism is mounted on the housing and covers the pressure relief hole.

21. The battery cell according to any one of claims 1 to 20, wherein the housing is cuboid.

22. The battery cell according to any one of claims 1, 2, and 8 to 20, wherein the housing is cylindrical, and an axial direction of the housing is parallel to the length direction.

23. The battery cell according to any one of claims 1 to 22, wherein L≥160 mm.

24. A battery, comprising the battery cell according to any one of claims 1 to 23.

25. A power consuming device, comprising the battery cell according to any one of claims 1 to 23, wherein the battery cell is configured to provide electric energy to the power consuming device.
